(19) Europäisches Patentamt
European Patent Office
Office européen des brevets

(11) **EP 2 923 843 A1**

(12) **EUROPEAN PATENT APPLICATION**

(43) Date of publication:
**30.09.2015 Bulletin 2015/40**

(51) Int Cl.:
**B41J 2/175** (2006.01)　　**C09D 11/00** (2014.01)
**C09D 11/101** (2014.01)　　**C09D 11/30** (2014.01)

(21) Application number: **15161349.4**

(22) Date of filing: **27.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.03.2014　JP 2014070038**
**28.03.2014　JP 2014070059**

(71) Applicant: **Seiko Epson Corporation**
**Shinjuku-ku**
**Tokyo (JP)**

(72) Inventors:
- **Nakano, Keitaro**
  **Suwa-shi, Nagano 392-8502 (JP)**
- **Sato, Chigusa**
  **Suwa-shi, Nagano 392-8502 (JP)**
- **Karasawa, Masahiro**
  **Suwa-shi, Nagano 392-8502 (JP)**

(74) Representative: **Miller Sturt Kenyon**
**9 John Street**
**London WC1N 2ES (GB)**

(54) **NON-AQUEOUS PHOTOCURABLE INK JET COMPOSITION STORAGE BODY AND RECORDING METHOD**

(57)　Provided is a non-aqueous photocurable ink jet composition storage body including: a non-aqueous photocurable ink jet composition which contains a polymerizable compound of which a moisture absorption rate at a temperature of 60°C and relative humidity of 90% is equal to or greater than 1.5% by mass/24 hours; and a container which accommodates the non-aqueous photocurable ink jet composition and is formed of a member having a metal oxide layer, or a package which accommodates at least a container accommodating the non-aqueous photocurable ink jet composition and is formed of a member having a metal oxide layer and a recording method.

**Description**

BACKGROUND

1. Technical Field

The present invention relates to a non-aqueous photocurable ink jet composition storage body and a recording method.

2. Related Art

With an ink jet recording method, recording of a high-definition image can be performed with a comparatively simple apparatus and the method has been rapidly developed in various fields. Meanwhile, various investigations have been performed regarding a storage body which stores an ink composition. JP-A-2007-131330, for example, discloses a storage container of a photocurable ink composition which accommodates a photocurable ink composition not containing a free thermal polymerization inhibitor and in which there are solids containing a substance for preventing a curing reaction of a radical polymerizable compound, in order to provide a storage container and a storage method which prevent the curing reaction and an increase in viscosity of the radical polymerizable compound when storing the ink composition and not to disturb the curing reaction when using the ink composition.

However, an ink composition having excellent curing properties or adhesiveness includes a component having hydrophilicity comparatively in many cases. When such an ink composition is stored in a storage body of the related art, the ink composition easily absorbs moisture. The moisture absorption of the ink composition when being stored causes a decrease in curing properties or generation of foreign materials. Meanwhile, in order to prevent the moisture absorption, forming a metal deposition layer on a surface of the storage body is considered, but in this case, visibility of content in the storage body decreases and it is difficult to identify the generation of foreign materials.

SUMMARY

An advantage of some aspects of the invention is to provide a non-aqueous photocurable ink jet composition storage body which can prevent a decrease in curing properties and ensure visibility of content, and a recording method using the storage body.

Another advantage of some aspects of the invention is to provide a non-aqueous photocurable ink jet composition storage body which can prevent a decrease in curing properties of an ink composition and generation of foreign materials and ensure visibility of content, and a recording method using the storage body.

The inventors have performed investigations in order to solve the problems. As a result, the inventors have found that the problems can be solved by using a storage body having a predetermined configuration, and the invention has been completed.

A first aspect of the invention is as follows.

[1] A non-aqueous photocurable ink jet composition storage body including: a non-aqueous photocurable ink jet composition which contains a polymerizable compound of which a moisture absorption rate at a temperature of 60°C and relative humidity of 90% is equal to or greater than 1.5% by mass/24 hours; and a container which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

[2] The non-aqueous photocurable ink jet composition storage body according to [1], in which the polymerizable compound includes one or more selected from a group consisting of oxygen atoms coupled with two acyclic hydrocarbon groups, a heterocyclic group containing oxygen atoms, and a hydroxyl group.

[3] The non-aqueous photocurable ink jet composition storage body according to [1] or [2], in which content of the polymerizable compound is equal to or greater than 20% by mass, with respect to the total amount of the non-aqueous photocurable ink jet composition.

[4] The non-aqueous photocurable ink jet composition storage body according to any one of [1] to [3], in which the metal oxide layer contains one or more oxides selected from a group consisting of silica, alumina, titania, zirconia, and ceria.

[5] The non-aqueous photocurable ink jet composition storage body according to any one of [1] to [4], in which the non-aqueous photocurable ink jet composition further contains an acylphosphine oxide-based compound.

[6] The non-aqueous photocurable ink jet composition storage body according to any one of [1] to [5], in which the polymerizable compound contains a radical polymerizable compound.

[7] The non-aqueous photocurable ink jet composition storage body according to any one of [1] to [6], in which the non-aqueous photocurable ink jet composition further contains a pigment and a pigment dispersant.

[8] The non-aqueous photocurable ink jet composition storage body according to any one of [1] to [7], in which the container or the package has visible light transmission.

[9] The non-aqueous photocurable ink jet composition storage body according to any one of [1] to [8], in which moisture permeability of the container or the package is equal to or less than 20 $g/m^2 \cdot 24$ hours.

[10] A recording method including: delivering the non-aqueous photocurable ink jet composition to discharge nozzles from the non-aqueous photocurable ink jet composition storage body according to any one of [1] to [9], through ink flow paths; and discharging the non-aqueous photocurable ink jet composition to a recording medium from the discharge nozzles.

[11] The recording method according to [10], further including: irradiating the non-aqueous photocurable ink jet composition attached to the recording medium with an ultraviolet light beam having an emission peak wavelength of 350 nm to 420 nm using a light emitting diode and curing the non-aqueous photocurable ink jet composition.

A second aspect of the invention is as follows.

[1] A non-aqueous photocurable ink jet composition storage body including: a non-aqueous photocurable ink jet composition which contains a polymerizable compound, a pigment, and a pigment dispersant, in which a moisture absorption rate at a temperature of 60°C and relative humidity of 90% is from 0.3% by mass/24 hours to 2.0% by mass/24 hours; and a container which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

[2] The non-aqueous photocurable ink jet composition storage body according to [1], in which the polymerizable compound contains a radical polymerizable compound.

[3] The non-aqueous photocurable ink jet composition storage body according to [1] or [2], in which the metal oxide layer contains one or more oxides selected from a group consisting of silica, alumina, titania, zirconia, and ceria.

[4] The non-aqueous photocurable ink jet composition storage body according to any one of [1] to [3], in which the polymerizable compound includes one or more selected from a group consisting of oxygen atoms coupled with two acyclic hydrocarbon groups, a heterocyclic group containing oxygen atoms, and a hydroxyl group.

[5] The non-aqueous photocurable ink jet composition storage body according to any one of [1] to [4], in which content of the polymerizable compound is equal to or greater than 20% by mass, with respect to the total amount of the non-aqueous photocurable ink jet composition.

[6] The non-aqueous photocurable ink jet composition storage body according to any one of [1] to [5], in which the non-aqueous photocurable ink jet composition further contains an acylphosphine oxide-based compound.

[7] The non-aqueous photocurable ink jet composition storage body according to any one of [1] to [6], in which the container or the package has visible light transmission.

[8] The non-aqueous photocurable ink jet composition storage body according to any one of [1] to [7], in which moisture permeability of the container or the package is equal to or smaller than 20 $g/m^2 \cdot 24$ hours.

[9] A recording method including: delivering the non-aqueous photocurable ink jet composition to discharge nozzles from the non-aqueous photocurable ink jet composition storage body according to any one of [1] to [8], through ink flow paths; and discharging the non-aqueous photocurable ink jet composition to a recording medium from the discharge nozzles.

[10] The recording method according to [9], further including: irradiating the non-aqueous photocurable ink jet composition attached to the recording medium with an ultraviolet light beam having an emission peak wavelength of 350 nm to 420 nm using a light emitting diode and curing the non-aqueous photocurable ink jet composition.

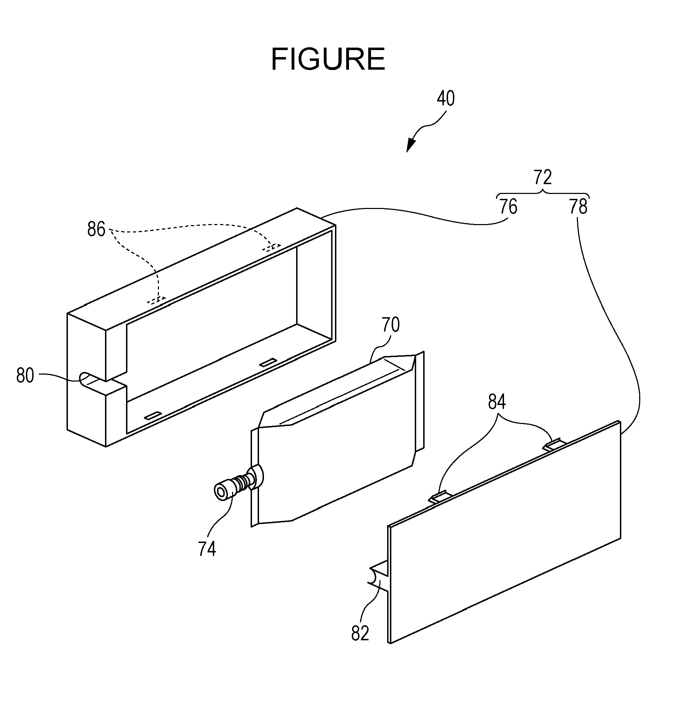

## BRIEF DESCRIPTION OF THE DRAWING

Embodiments of the invention will now be described by way of examples only with reference to the accompanying drawing, wherein like numbers reference like elements.

The Figure is an exploded perspective view showing an example of a non-aqueous photocurable ink jet composition storage body of the embodiment.

## DESCRIPTION OF EXEMPLARY EMBODIMENTS

Hereinafter, embodiments for realizing the first aspect of the invention (hereinafter, referred to as "the embodiment") will be described in detail with reference to the drawing, if necessary, but the invention is not limited thereto, and various modifications can be performed within a range not departing from the scope thereof. In the drawing, the same reference numerals are used for the same elements, and the overlapped description thereof will be omitted. The positional relationship of upper, lower, right, and left sides is based on the positional relationship shown in the drawing, unless otherwise noted. The dimensional ratios of the drawing are not limited to the scale of the drawing.

Non-Aqueous Photocurable Ink Jet Composition Storage Body

A non-aqueous photocurable ink jet composition storage body of the embodiment (hereinafter, also referred to as a "storage body") includes a non-aqueous photocurable ink jet composition (hereinafter, also referred to as an "ink composition") which contains a polymerizable compound of which a moisture absorption rate at a temperature of 60°C and relative humidity of 90% is equal to or greater than 1.5% by mass/24 hours, and a container which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

In this specification, the "container" means an element which directly accommodates the ink composition. The "package" means an element which accommodates at least a container directly accommodating the ink composition, that is, an element which indirectly accommodates the ink composition. Any package may be used as long as it accommodates at least the container or may be an element which accommodates the entire storage body. The "storage body" has a function of containing the container and a case for protecting the container which is used if necessary, and means an element which directly or indirectly accommodates the ink composition. The storage body is used for storage and transportation of the ink composition before using the ink composition by a recording apparatus and supplies the ink composition accommodated in the storage body to a recording apparatus when using the ink composition. The storage body may be a storage body which is formed of only a container, that is, the container as it is.

The embodiment of the storage body is not particularly limited to the following, but examples thereof include an ink cartridge, a pack, a bottle, a tank, a bin, and a can. Among these, an ink cartridge, a pack, a bottle, and a tank are preferable and a pack is more preferable, from the viewpoints of general use and ease of control of the degree of moisture permeability and the degree of oxygen permeability which will be described later, to a desired value.

The Figure shows an exploded perspective view showing an example of the non-aqueous photocurable ink jet composition storage body of the embodiment. An ink cartridge 40 is configured with an ink pack 70 which is filled with ink, and a cartridge case 72 which is configured with a main body case 76 and a lid 78 accommodating the ink pack 70 therein and protecting the ink pack. The ink pack 70 includes an ink supply port 74. The main body case 76 includes a cut-out portion 80 and grooves 86, and the lid 78 includes a pressing portion 82 and hooks 84. In the ink cartridge 40, the ink pack 70 is accommodated in the main body case 76 and the lid 78, and in this case, the ink supply port 74 is fit into the cut-out portion 80 and is interposed between the pressing portion 82 and the cut-out portion 80, and accordingly, the ink supply port is fixed. The main body case 76 and the lid 78 are sealed by fitting the hooks 84 into the grooves 86. The ink pack 70 corresponds to the "container" of the embodiment and the entire cartridge including the cartridge case 72 corresponds to the storage body. The "package" is not shown in the drawing, but the package may be a package which accommodates the entire cartridge, or may be a package which accommodates the ink pack 70 in the cartridge and is accommodated in the cartridge case 72. Alternatively, the cartridge case 72 may also be used as a package. The entire cartridge including the package may be defined as the "storage body".

An embodiment of the storage body is not particularly limited, and an embodiment (A) of a cartridge which mounts a storage body which is separated from a recording apparatus on a recording apparatus and supplies an ink composition to a recording apparatus from a storage body in a state of being mounted, an embodiment (B) of a bottle which supplies an ink composition to an ink tank of a recording apparatus from a storage body which is separated from a recording apparatus, and an embodiment (C) of attaching a storage body as a part of a recording apparatus in advance are exemplified. In the cases of the embodiment (A) and the embodiment (C), it is possible to perform recording by supplying the ink composition to a head of the recording apparatus through a connection portion such as an ink tube from the mounted storage body or the attached storage body. In the case of the embodiment (B), it is possible to perform recording by transferring the ink composition to an ink tank of the recording apparatus from the storage body and supplying the ink composition to a head of the recording apparatus through a connection portion such as an ink tube from an ink tank.

Metal Oxide Layer

The container accommodating the non-aqueous photocurable ink jet composition or the package accommodating at least the container accommodating the non-aqueous photocurable ink jet composition is formed of a member including a metal oxide layer. The metal oxide layer is included in at least any one of an outer surface, an inner surface, and the inside of a member configuring the container or the package. It is preferable that the metal oxide layer is included on the entire surface containing a composition of a member. By including the metal oxide layer, moisture permeability further decreases and visibility is also excellent in the container or the package of the embodiment. Since moisture permeability is low, it is possible to prevent generation of foreign materials caused by moisture absorption of the ink composition. Since excellent visibility is obtained, it is easy to see and find foreign materials generated in the container or the package.

The metal oxide contained in the metal oxide layer is not particularly limited, but it is preferable to use an oxide of one or more metals selected from a group consisting of silica, alumina, titania, zirconia, and ceria, for example. By containing the metal oxide, the moisture permeability of the container or the package further decreases and curing properties and adhesiveness of the accommodated ink composition is maintained. The metal oxide contained in the metal oxide layer may be used alone or in a combination of two or more kinds thereof. In addition, the metal oxide layer may be configured with one layer or two or more layers.

The thickness of the metal oxide layer is preferably from 10 nm to 500 nm, more preferably from 10 nm to 100 nm, and even more preferably from 20 nm to 80 nm. Since the thickness of the metal oxide layer is equal to or greater than 10 nm, the moisture permeability of the container or the package further decreases and the curing properties and the adhesiveness of the accommodated ink composition are maintained. Since the thickness of the metal oxide layer is equal to or less than 500 nm, visibility or flexibility is further improved.

A formation method of the metal oxide layer is not particularly limited, and examples thereof include a method of performing vapor deposition of a metal oxide on a surface of a resin structure or an inorganic structure configuring a container or a package, and a method of applying and drying a liquid composition containing a metal oxide on a surface of a resin structure or an inorganic structure configuring a container or a package. In the container or the package of the embodiment, the metal oxide layer may be a layer mainly configuring the container or the package.

Other Constituent Material of Member

The container or the package is configured with a member including the metal oxide layer. As a configuration other than the metal oxide layer of the member, it is possible to use a structure configured with a resin material (resin structure) or a structure configured with an inorganic material (inorganic structure), and it is possible to include the metal oxide layer on the surface or the inside of the structures. A constituent material configuring the resin structure or the inorganic structure is not particularly limited, and examples thereof include a resin such as polyethylene terephthalate (PET), polypropylene, polyethylene, polyamide-based fiber, an ethylene vinyl acetate copolymer, an ethylene vinyl alcohol copolymer (EVOH), or polystyrene; and an inorganic substance such as glass. The constituent materials may be combined at an appropriate ratio or the plural kinds of the constituent materials may be used in combination.

It is possible to configure the member as a film or a member having a cubic shape such as a box or as a bottle, and it is preferable to use a film from the viewpoint of achieving a light weight container. Among the constituent materials, a film material having excellent durability in the case of using the member as a film is not particularly limited, and examples thereof include a plastic film such as polyethylene terephthalate (PET), polyethylene, polypropylene, polyamide-based fiber, an ethylene vinyl acetate copolymer, an ethylene vinyl alcohol copolymer, and polystyrene. Among these, polyethylene, polypropylene, polyamide-based fiber, an ethylene vinyl acetate copolymer, an ethylene vinyl alcohol copolymer, and polystyrene having high density, low density, or linear low density are preferable. The film material may be a laminated film or a stretched film. As the inorganic structure, glass or metal is used. The member may be a material at least including the metal oxide layer, a member mainly including the metal oxide layer as a constituent element, or a member only configured with the metal oxide layer, for example.

The degree of oxygen permeability of the member including the metal oxide layer of the container or the package is preferably equal to or less than 5.0 cc·20 $\mu$m/(m$^2$·day·atm), more preferably equal to or less than 2.0 cc·20 $\mu$m/(m$^2$·day·atm), and even more preferably equal to or less than 1.0 cc·20 $\mu$m/(m$^2$·day·atm). Since the degree of oxygen permeability is in the range described above, an amount of dissolved oxygen in the ink composition being stored hardly changes. The degree of oxygen permeability can be measured with a method based on JIS K7126 (ISO15105).

In order to improve the degree of oxygen permeability, the container or the package may include a gas barrier layer. The gas barrier layer is not particularly limited, and examples thereof include a metal layer such as an aluminum layer, or an organic layer such as an ethylene vinyl acetate copolymer or a polyvinyl alcohol layer.

The total thickness of the member of the container or the package is preferably equal to or greater than 50 $\mu$m, more preferably equal to or greater than 70 $\mu$m, and even more preferably equal to or greater than 100 $\mu$m. Since the total thickness of the container or the package is equal to or greater than 100 $\mu$m, moisture content and the amount of dissolved oxygen of the accommodated ink composition hardly changes and the desired strength of the container or the package is obtained. The total thickness of the container or the package preferably equal to or less than 300 $\mu$m, more preferably equal to or less than 200 $\mu$m, and even more preferably equal to or less than 150 $\mu$m. Since the total thickness of the container or the package is equal to or less than 200 $\mu$m, the flexibility is further improved.

The amount of the ink composition which can be accommodated in the container or the package is preferably from 100 mL to 5,000 mL, more preferably from 100 mL to 4,000 mL, even more preferably from 300 mL to 3,000 mL, and further more preferably from 500 mL to 2,500 mL. Since the volume of the container or the package is in the range described above, after starting the use of the container or the package, it is possible to use all of the ink composition while the amount of dissolved oxygen in the ink in the container or the package does not substantially change, or the amount of dissolved oxygen in the ink composition being stored hardly changes.

The container or the package preferably has visible light transmission. The term "visible light" means light having a wavelength of 400 nm to 800 nm. The visible light transmittance is preferably equal to or greater than 40%, more preferably equal to or greater than 50%, and even more preferably equal to or greater than 60%, as an average transmittance in the range of the above wavelengths. Since the visible light transmittance is equal to or greater than 40%, the visibility is further improved. An upper limit of the visible light transmittance is not particularly limited, but is preferably equal to or less than 100%. The visible light transmittance decreases by increasing the thickness of the structure (member) configured with the metal oxide layer and other constituent materials, and increases by decreasing the thickness of the structure (member) configured with the metal oxide layer and other constituent materials. The visible light transmittance can be measured with a method disclosed in Examples.

The moisture permeability of the container or the package is preferably equal to or less than 20 g/m$^2$·24 hours, more preferably equal to or less than 10 g/m$^2$·24 hours, and even more preferably equal to or less than 5.0 g/m$^2$·24 hours. Since the moisture permeability is equal to or less than 20 g/m$^2$·24 hours, it is possible to maintain the curing properties and the adhesiveness of the accommodated ink composition and the generation of foreign materials is prevented. In addition, the moisture permeability of the container or the package is preferably equal to or greater than 0.10 g/m$^2$·24 hours, more preferably equal to or greater than 0.20 g/m$^2$·24 hours, even more preferably equal to or greater than 1.0 g/m$^2$·24 hours, and further more preferably equal to or greater than 2.0 g/m$^2$·24 hours. Since the moisture permeability is equal to or greater than 0.10 g/m$^2$·24 hours, storage stability of the composition is further improved. The moisture permeability increases by decreasing the thickness of the member and decreases by increasing the thickness thereof, for example. The moisture permeability can be measured with a method disclosed in Examples.

Non-Aqueous Photocurable Ink Jet Composition

The non-aqueous photocurable ink jet composition contains a polymerizable compound of which the moisture absorption rate at a temperature of 60°C and relative humidity of 90% is equal to or greater than 1.5% by mass/24 hours. In the embodiment, such a polymerizable compound is also referred to as a hydrophilic polymerizable compound.

Hydrophilic Polymerizable Compound

Among the polymerizable compounds, the polymerizable compound of which a moisture absorption rate at a temperature of 60°C and relative humidity of 90% is equal to or greater than 1.5% by mass/24 hours is contained. The moisture absorption rate thereof is preferably from 1.75% by mass/24 hours to 11% by mass/24 hours and more preferably from 1.90% by mass/24 hours to 10% by mass/24 hours. When the moisture absorption rate of the compound is equal to or greater than 1.5% by mass/24 hours, excellent curing properties are obtained. When the moisture absorption rate of the compound is equal to or smaller than 11% by mass/24 hours, it is possible to further prevent generation of foreign materials caused by the moisture absorption. The moisture absorption rate can be measured with a method disclosed in Examples.

The polymerizable compound of which the moisture absorption rate at a temperature of 60°C and relative humidity of 90% is equal to or greater than 1.5% by mass/24 hours is not particularly limited, and examples thereof include a monofunctional monomer such as acryloyl morpholine, 4-hydroxybutyl acrylate, tetrahydrofurfuryl acrylate, or 2-hydroxy-3-phenoxypropyl acrylate; and a bifunctional monomer such as 2-(2-vinyloxyethoxy)ethyl acrylate or dipropylene glycol diacrylate.

Among these, it is preferable to use a polymerizable compound including one or more selected from a group consisting of oxygen atoms coupled with two acyclic hydrocarbon groups (hereinafter, also referred to as an "acyclic hydrocarbon group containing oxygen atoms"), a heterocyclic group containing oxygen atoms, and a hydroxyl group. These are also referred to as hydrophilic groups. Since such a polymerizable compound has a hydrophilic group having comparatively high water absorbability, the invention is particularly advantageous. The acyclic hydrocarbon group containing oxygen atoms is obtained by coupling an acyclic hydrocarbon group with two bonds of the oxygen atoms. The two acyclic hydrocarbon groups may be the same as each other or may be different from each other, and each of these is a monovalent or di- or higher valent saturated or unsaturated acyclic hydrocarbon group and 1 to 8 carbon atoms are preferable for each acyclic hydrocarbon group. The heterocyclic group containing oxygen atoms includes oxygen atoms as atoms configuring a heterocyclic ring. The heterocyclic ring is preferably a three- to eight-membered ring. The hydroxyl group is a hydroxyl group included in a molecule of the polymerizable compound. Examples of the polymerizable compound including an acyclic hydrocarbon group containing oxygen atoms include 2-(2-vinyloxyethoxy) ethyl acrylate and dipropylene glycol diacrylate, examples of the polymerizable compound including a heterocyclic group containing oxygen atoms include acryloyl morpholine and tetrahydrofurfuryl acrylate, and examples of the polymerizable compound including a hydroxyl group include 4-hydroxybutyl acrylate and 2-hydroxy-3-phenoxypropyl acrylate. As the acyclic hydrocarbon group containing oxygen atoms, an ether bond is used. The moisture absorption rate at a temperature of 60°C and relative humidity of 90% of the polymerizable compound including the hydrophilic group is equal to or greater than 1.5% by mass/24 hours, but since the moisture absorption rate is determined in balance with a portion other than the hydrophilic group in a molecule, the moisture absorption rate may be confirmed with a method disclosed in Examples by preparing the polymerizable compound including the hydrophilic group, for example.

The polymerizable compound preferably includes a radical polymerizable compound and more preferably includes a hydrophilic radical polymerizable compound. Since the polymerizable compound includes a radical polymerizable compound, the curing properties thereof are further improved.

A Hydrophile-Lipophile Balance (HLB) value of the polymerizable compound is preferably equal to or greater than 8, more preferably equal to or greater than 9, and even more preferably equal to or greater than 10. Since the polymerizable compound having the HLB value equal to or greater than 8 has comparatively high water absorbability, the invention is particularly advantageous. An upper limit of the HLB value of the polymerizable compound is not particularly limited, and is preferably equal to or smaller than 13. The HLB value of this specification is acquired based on the Griffin method.

The ratio of molecular weight per molecule of the polymerizable compound to the number of hydrophilic groups per molecule of the polymerizable compound (molecular weight/ number of hydrophilic groups) is preferably equal to or greater than 30, more preferably equal to or greater than 50, and even more preferably equal to or greater than 100. Since the molecular weight/ number of hydrophilic groups of the polymerizable compound is equal to or greater than 30, the adhesiveness to a base is further improved. The molecular weight/ number of hydrophilic groups of the polymerizable compound is preferably equal to or smaller than 250, more preferably equal to or smaller than 200, and even preferably equal to or smaller than 100. Since the polymerizable compound having the molecular weight/ number of hydrophilic groups equal to or smaller than 250 has comparatively high water absorbability, the invention is particularly advantageous. The hydrophilic group is not particularly limited, and examples thereof include the oxygen atoms coupled with two acyclic hydrocarbon groups, a heterocyclic group containing oxygen atoms, and a hydroxyl group.

The ratio of the number of carbon atoms to the number of hydrophilic groups per molecule of the polymerizable compound (number of carbon atoms/ number of hydrophilic groups) is preferably equal to or greater than 3, more preferably equal to or greater than 4, and even more preferably equal to or greater than 7. Since the number of carbon atoms/ number of hydrophilic groups of the polymerizable compound is equal to or greater than 3, the adhesiveness to a base is further improved. The number of carbon atoms/ number of hydrophilic groups of the polymerizable compound is preferably equal to or smaller than 13, more preferably equal to or smaller than 12, even more preferably equal to or smaller than 10, and further more preferably equal to or smaller than 8. Since the polymerizable compound having the number of carbon atoms/ number of hydrophilic groups equal to or smaller than 13 has comparatively high water absorbability, the invention is particularly advantageous.

The content of the polymerizable compound is preferably equal to or greater than 20% by mass, more preferably equal to or greater than 30% by mass, even more preferably equal to or greater than 45% by mass, further more preferably equal to or greater than 50% by mass, and particularly preferably equal to or greater than 60% by mass, with respect to the total amount of the ink composition. Since the content of the polymerizable compound is equal to or greater than 20% by mass, curing properties and adhesiveness are further improved. In addition, the content of the polymerizable compound is preferably equal to or less than 98% by mass, more preferably equal to or less than 95% by mass, even more preferably equal to or less than 90% by mass, further more preferably equal to or less than 80% by mass, and particularly preferably equal to or less than 70% by mass, with respect to the total amount of the ink composition. Since the content of the polymerizable compound is equal to or less than 98% by mass, the foreign materials are more difficult to generate.

The non-aqueous photocurable ink jet composition may contain a monofunctional, bifunctional, and tri- or higher functional polymerizable compound other than the hydrophilic polymerizable compound. The other polymerizable compound is not particularly limited, and examples thereof include a monofunctional monomer such as phenoxyethyl acrylate or isobornyl acrylate; a bifunctional monomer such as 1,6-hexanediol diacrylate or dimethylol-tricyclodecane diacrylate; and a trifunctional monomer such as pentaerythritol triacrylate.

The polymerizable compound may be used alone or in a combination of two or more kinds thereof. The content of the entire polymerizable compound containing the ink composition is preferably equal to or greater than 70% by mass with respect to the total amount of the ink composition.

Photopolymerization Initiator

The ink composition may further contain a photopolymerization initiator. The photopolymerization initiator is not particularly limited, and examples thereof include an acyl phosphine oxide-based compound and a thioxanthone-based compound. Among these, an acylphosphine oxide-based compound is preferable. Since the acylphosphine oxide-based compound is included, the curing properties are further improved.

AcylPhosphine Oxide-Based Compound

The acylphosphine oxide-based compound easily exhibits oxygen inhibition, but in contrast, the curing properties in the case of using an LED are further improved by using the acylphosphine oxide-based compound. A curing process by a UV-LED is more excellent with the combination of the acylphosphine oxide-based compound and the thioxanthone-based compound, and the curing properties and the adhesiveness of the ink composition are more excellent.

The acylphosphine oxide-based compound is not particularly limited, and examples thereof include bis(2,4,6-trimethyl benzoyl)-phenyl phosphine oxide, 2,4,6-trimethyl benzoyl-diphenyl-phosphine oxide, and bis-(2,6-dimethoxy benzoyl)-2,4,4-trimethyl pentyl phosphine oxide.

A commercially available product as the acylphosphine oxide-based compound is not particularly limited, and examples thereof include IRGACURE 819 (bis (2,4,6-trimethyl benzoyl)-phenyl phosphine oxide) and DAROCUR TPO (2,4,6-trimethyl benzoyl-diphenyl-phosphine oxide).

Content of the acylphosphine oxide-based compound is preferably from 5.0% by mass to 15.0% by mass, more preferably from 6.0% by mass to 14.0% by mass, and even more preferably from 7.0% by mass to 10.0% by mass, with respect to the total mass of the ink composition. Since the content of the acylphosphine oxide-based compound is equal to or greater than 5.0% by mass, the curing properties are more excellent. In addition, since the content of the acylphosphine oxide-based compound is equal to or less than 15.0% by mass, residual unmelted photopolymerization initiator or generation of precipitates thereof is decreased, and coloring of the ink or yellow discoloration of a coated film due to the photopolymerization initiator is decreased.

Thioxanthone-Based Compound

Since the thioxanthone-based compound is included, it is possible to decrease surface tackiness, and it is particularly possible to prevent color mixture and bleeding between dots by curing the ink surface, in the case of using a thin film which can easily exhibit oxygen inhibition.

The thioxanthone-based compound is not particularly limited, and examples thereof preferably include one or more selected from a group consisting of thioxanthone, diethyl thioxanthone, isopropyl thioxanthone, and chlorothioxanthone. Although not particularly limited, an example of diethyl thioxanthone preferably includes 2,4-diethyl thioxanthone, an example of isopropyl thioxanthone preferably includes 2-isopropyl thioxanthone, and an example of chlorothioxanthone preferably includes 2-chloro thioxanthone. When the ink composition containing the thioxanthone-based compound is used, the curing properties, the storage stability, and discharge stability are more excellent. Among these, the thioxanthone-based compound containing diethyl thioxanthone is preferable. Since the diethyl thioxanthone is included, an ultraviolet light (UV light) beam in a wide range can be efficiently converted into active species.

A commercially available product as the thioxanthone-based compound is not particularly limited, and examples thereof include Speedcure DETX (2,4-diethyl thioxanthone) and Speedcure ITX (2-isopropyl thioxanthone) (all manufactured by Lambson Ltd.), and KAYACURE DETX-S (2,4-diethyl thioxanthone) (manufactured by Nippon Kayaku Co., Ltd.)

Content of the photopolymerization initiator is preferably from 5.0% by mass to 20% by mass, more preferably from 5.0% by mass to 15% by mass, and even more preferably from 7% by mass to 13% by mass, with respect to the total mass of the ink composition. Since the total content of the polymerization initiator is equal to or greater than 5.0% by mass, it is possible to decrease surface tackiness, and it is possible to prevent color mixture and bleeding between dots by curing the ink surface, in the case of using a thin film which can easily exhibit oxygen inhibition. In addition, since the total content of the polymerization initiator is equal to or less than 20% by mass, coloring of the ink due to the initiator is decreased, and yellow discoloration of a hue is decreased, or a residual unmelted initiator or the amount of precipitates is decreased.

Pigment and Pigment Dispersant

The ink composition may include a pigment and may further include a pigment dispersant with the pigment. Since the pigment and the pigment dispersant easily cause generation of foreign materials due to moisture absorption, and the ink composition contains these, the invention is particularly advantageous.

Pigment

The pigment used in black ink is not particularly limited, and examples thereof include No. 2300, No. 900, MCF88, No. 33, No. 40, No. 45, No. 52, MA7, MA8, MA100, and No. 2200B (all manufactured by Mitsubishi Chemical Corporation), Raven 5750, Raven 5250, Raven 5000, Raven 3500, Raven 1255, and Raven 700 (all manufactured by Carbon Columbia), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all manufactured by CABOT JAPAN K.K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa).

A pigment used in white ink is not particularly limited, and examples thereof include C.I. Pigment White 6, 18, and 21, titanium oxide, zinc oxide, zinc sulfide, antimony oxide, zirconium oxide, white hollow resin particles, and polymer particles.

The pigment used in yellow ink is not particularly limited, and examples thereof include C.I. Pigment Yellow, 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

The pigment used in magenta ink is not particularly limited, and examples thereof include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224 and 245, and C.I. Pigment Violet 19, 23, 32, 33, 36, 38, 43, and 50.

The pigment used in cyan ink is not particularly limited, and examples thereof include C.I. Pigment Blue 1, 2, 3, 15, 15:1, 15:2, 15:3, 15:34, 15:4, 16, 18, 22, 25, 60, 65, and 66, and C.I. Vat Blue 4 and 60.

The other pigments are not particularly limited, and examples thereof include C.I. Pigment Green 7 and 10, C.I. Pigment Brown 3, 5, 25, and 26, and C.I. Pigment Orange 1, 2, 5, 7, 13, 14, 15, 16, 24, 34, 36, 38, 40, 43, and 63.

Pigment Dispersant

The pigment may be a dispersible pigment. As a dispersion method of the pigment, a pigment dispersant is used, for example.

The pigment dispersant is not particularly limited, and examples thereof include polyvinyl alcohols; polyvinyl pyrrolidones; an acrylic resin such as polyacrylic acid, an acrylic acid-acrylonitrile copolymer, a potassium acrylate-acrylonitrile copolymer, a vinyl acetate-acrylic ester copolymer, or an acrylic acid-acrylic acid alkyl ester copolymer; a styrene-acrylic resin such as a styrene-acrylic acid copolymer, a styrene-methacrylic acid copolymer, a styrene-methacrylic acid-acrylic acid alkyl ester copolymer, a styrene-α-methyl styrene-acrylic acid copolymer, or a styrene-α-methyl styrene-acrylic acid-acrylic acid alkyl ester copolymer; a styrene-maleic acid copolymer; a styrene-maleic anhydride copolymer; a vinyl naphthalene-acrylic acid copolymer; a vinyl naphthalene-maleic acid copolymer; a vinyl acetate-based copolymer such as a vinyl acetate-ethylene copolymer, a vinyl acetate-fatty acid vinyl ethylene copolymer, a vinyl acetate-maleic acid ester copolymer, a vinyl acetate-crotonic acid copolymer, a vinyl acetate-acrylic acid copolymer, or salts thereof; proteins such as glue, gelatin, casein, or albumin; natural gums such as gum arabic or gum tragacanth; glycosides such as saponin; alginic acid derivatives such as alginic acid and propylene glycol alginate, triethanolamine alginate, or ammonium alginate; and cellulose derivatives such as methyl cellulose, carboxymethyl cellulose, hydroxyethyl cellulose, or ethyl hydroxyethyl cellulose. The pigment dispersant may be used alone or in combination of two or more kinds thereof.

Polymerization Inhibitor

The ink composition of the embodiment may contain a polymerization inhibitor. The polymerization inhibitor is not particularly limited, and examples thereof include hydroquinones represented by hydroquinone, hydroquinone monomethyl ether (MEHQ), 1-o-2,3,5-trimethyl hydroquinone, or 2-tert-butylhydroquinone; catechols represented by catechol, 4-methyl catechol, or 4-tert-butylcatechol; phenols represented by phenol, butyl hydroxy toluene, butyl hydroxy anisole, p-methoxy phenol, cresol, pyrogallol, 3,5-di-t-butyl-4-hydroxytoluene, 2,2'-methylenebis(4-methyl-6-t-butylphenol), 2,2'-methylenebis(4-ethyl-6-butylphenol), and 4,4'-thiobis(3-methyl-6-t-butylphenol); and hindered amines represented by a compound having a 2,2,6,6-tetramethyl piperidine-N-oxyl skeleton represented by 4-hydroxy-2,2,6,6-tetramethyl piperidinyl-l-oxyl, a compound having a 2,2,6,6-tetramethyl piperidine skeleton, a compound having a 2,2,6,6-tetramethylpiperidine-N-alkyl skeleton, and a compound having a 2,2,6,6-tetramethylpiperidine-N-acyl skeleton. The polymerization inhibitor may be used alone or in combination of two or more kinds thereof.

Content of the polymerization inhibitor is preferably from 0.05% by mass to 1.0% by mass, more preferably from 0.10% by mass to 0.50% by mass, and even more preferably from 0.10% by mass to 0.30% by mass, with respect to the total mass of the ink composition. Since the content of the polymerization inhibitor is equal to or greater than 0.05% by mass, the storage stability is further improved. In addition, since the content of the polymerization inhibitor is equal to or smaller than 1.0% by mass, the curing properties thereof are further improved.

Non-Aqueous System

The ink composition of the embodiment is non-aqueous. Specifically, content of water is preferably from 0% by mass to 1.0% by mass, more preferably from 0% by mass to 0.50% by mass, and even more preferably from 0% by mass to 0.30% by mass. Alternatively, an ink composition which does not substantially contain water is used.

Recording Method

A recording method of the embodiment includes a liquid delivery step of delivering the non-aqueous photocurable ink jet composition containing the polymerizable compound of which the moisture absorption rate at a temperature of 60°C and relative humidity of 90% is equal to or greater than 1.5% by mass/24 hours, to discharge nozzles from the non-aqueous photocurable ink jet composition storage body through ink flow paths, and a discharge step of discharging the non-aqueous photocurable ink jet composition to a recording medium from the discharge nozzles.

Liquid Delivering Step

The liquid delivering step is a step of delivering the non-aqueous photocurable ink jet composition to the discharge nozzles from the non-aqueous photocurable ink jet composition storage body through the ink flow paths. The "ink flow paths" herein are flow paths for causing the ink to flow in the ink jet recording apparatus. Examples of the ink flow path include an ink supply path for supplying the ink to an ink jet-type recording head from an ink accommodation container storing the ink, or a flow path for causing the ink to flow to nozzle openings in the ink jet-type recording head. As the liquid delivery step, a well-known method in the related art can be used.

Discharge Step

The discharge step is a step of discharging the non-aqueous photocurable ink jet composition to the recording medium from the discharge nozzles.

Curing Step

The recording method of the embodiment may further include a curing step. The curing step is a step of irradiating the non-aqueous photocurable ink jet composition attached to the recording medium with the ultraviolet light beam having an emission peak wavelength of 350 nm to 420 nm using a light emitting diode (LED) and curing the non-aqueous photocurable ink jet composition. By using the LED, it is possible to realize miniaturization and long life of the ink jet recording apparatus and high efficiency and low cost of the ink jet recording method, compared to a case using a metal halide light source or a mercury lamp.

Hereinafter, embodiments for realizing the second aspect of the invention (hereinafter, referred to as "the embodiment") will be described in detail with reference to the drawing, if necessary, but the invention is not limited thereto, and various modifications can be performed within a range not departing from the scope thereof. In the drawing, the same reference numerals are used for the same elements, and the overlapped description thereof will be omitted. The positional relationship of upper, lower, right, and left sides is based on the positional relationship shown in the drawing, unless otherwise noted. The dimensional ratio of the drawing is not limited to the scale of the drawing.

Non-Aqueous Photocurable Ink Jet Composition Storage Body

A non-aqueous photocurable ink jet composition storage body of the embodiment (hereinafter, also referred to as a "storage body") includes a non-aqueous photocurable ink jet composition (hereinafter, also referred to as an "ink composition") which contains a polymerizable compound, a pigment, and a pigment dispersant, in which the moisture absorption rate at a temperature of 60°C and relative humidity of 90% is from 0.3% by mass/24 hours to 2.0% by mass/24 hours, and a container which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

In this specification, the "container" means an element which directly accommodates the ink composition. The "package" means an element which accommodates at least a container directly accommodating the ink composition, that is, an element which indirectly accommodates the ink composition. Any package may be used as long as it accommodates at least the container or may be an element which accommodates the entire storage body. The "storage body" has a function of containing the container and a case for protecting the container which is used if necessary, and means an element which directly or indirectly accommodates the ink composition. The storage body is used for storage and transportation of the ink composition before using the ink composition in a recording apparatus and supplies the ink composition accommodated in the storage body to a recording apparatus when using the ink composition. The storage body may be a storage body which is formed of only a container, that is, the container as it is.

The embodiment of the storage body is not particularly limited to the following, but examples thereof include an ink cartridge, a pack, a bottle, a tank, a bin, and a can. Among these, an ink cartridge, a pack, a bottle, and a tank are preferable and a pack is more preferable, from the viewpoints of general use and ease of control of the degree of moisture permeability and the degree of oxygen permeability which will be described later, to a desired value.

The Figure shows an exploded perspective view showing an example of the non-aqueous photocurable ink jet composition storage body of the embodiment. An ink cartridge 40 is configured with an ink pack 70 which is filled with ink, and a cartridge case 72 which is configured with a main body case 76 and a lid 78 accommodating the ink pack 70 therein and protecting the ink pack. The ink pack 70 includes an ink supply port 74. The main body case 76 includes a cut-out portion 80 and grooves 86, and the lid 78 includes a pressing portion 82 and hooks 84. In the ink cartridge 40, the ink pack 70 is accommodated in the main body case 76 and the lid 78, and in this case, the ink supply port 74 is fit into the cut-out portion 80 and is interposed between the pressing portion 82 and the cut-out portion 80, and accordingly, the ink supply port is fixed. The main body case 76 and the lid 78 are sealed by fitting the hooks 84 into the grooves 86. The ink pack 70 corresponds to the "container" of the embodiment and the entire cartridge including the cartridge case 72 corresponds to the storage body. The "package" is not shown in the drawing, but the package may be a package which accommodates the entire cartridge, or may be a package which accommodates the ink pack 70 in the cartridge and is accommodated in the cartridge case 72. Alternatively, the cartridge case 72 may also be used as a package. The entire cartridge including the package may be defined as the "storage body".

An embodiment of the storage body is not particularly limited, and an embodiment (A) of a cartridge which mounts a storage body which is separated from a recording apparatus on a recording apparatus and supplies an ink composition to a recording apparatus from a storage body in a state of being mounted, an embodiment (B) of a bottle which supplies an ink composition to an ink tank of a recording apparatus from a storage body which is separated from a recording apparatus, and an embodiment (C) of attaching a storage body as a part of a recording apparatus in advance are exemplified. In the cases of the embodiment (A) and the embodiment (C), it is possible to perform recording by supplying the ink composition to a head of the recording apparatus through a connection portion such as an ink tube from the mounted storage body or the attached storage body. In a case of the embodiment (B), it is possible to perform recording by transferring the ink composition to an ink tank of the recording apparatus from the storage body and supplying the ink composition to a head of the recording apparatus through a connection portion such as an ink tube from an ink tank.

Metal Oxide Layer

The container or the package is formed of a member including a metal oxide layer. The metal oxide layer may be formed on the entire or a part of at least any one of an outer surface and an inner surface of the container or the package. It is preferable that the metal oxide layer is included on the entire surface containing a composition of a member. By including the metal oxide layer, moisture permeability further decreases and visibility is also excellent in the container or the package of the embodiment. Since moisture permeability is low, it is possible to prevent generation of foreign materials caused by moisture absorption of the ink composition. Since excellent visibility is obtained, it is easy to see and find foreign materials generated in the container or the package.

The metal oxide contained in the metal oxide layer is not particularly limited, but it is preferable to use an oxide of one or more metals selected from a group consisting of silica, alumina, titania, zirconia, and ceria, for example. By containing the metal oxide, the moisture permeability of the container or the package further decreases and curing properties and adhesiveness of the accommodated ink composition is maintained. The metal oxide contained in the metal oxide layer may be used alone or in combination of two or more kinds thereof. In addition, the metal oxide layer may be configured with one layer or two or more layers.

The thickness of the metal oxide layer is preferably from 10 nm to 500 nm, more preferably from 10 nm to 100 nm, and even more preferably from 20 nm to 80 nm. Since the thickness of the metal oxide layer is equal to or greater than 10 nm, the moisture permeability of the container or the package further decreases and the curing properties and the adhesiveness of the accommodated ink composition are maintained. Since the thickness of the metal oxide layer is equal to or less than 500 nm, visibility or flexibility is further improved.

The formation method of the metal oxide layer is not particularly limited, and examples thereof include a method of performing vapor deposition of a metal oxide on a surface of a resin structure or an inorganic structure configuring a container or a package, and a method of applying and drying a liquid composition containing a metal oxide on a surface of a resin structure or an inorganic structure configuring a container or a package. In the container or the package of the embodiment, the metal oxide layer may be a layer mainly configuring the container or the package.

Other Constituent Material of Member

The container or the package is configured with a member including the metal oxide layer. As a configuration other than that of the metal oxide layer of the member, it is possible to use a structure configured with a resin material (resin structure) or a structure configured with an inorganic material (inorganic structure), and the metal oxide layer may be included on the surface or the inside of the structures. A constituent material configuring the resin structure or the inorganic structure is not particularly limited, and examples thereof include a resin such as polyethylene terephthalate (PET), polypropylene, polyethylene, polyamide-based fiber, an ethylene vinyl acetate copolymer, an ethylene vinyl alcohol copolymer (EVOH), or polystyrene; and an inorganic substance such as glass. The constituent materials may be combined at an appropriate ratio or the plural kinds of the constituent materials may be used in combination.

It is possible to configure the member as a film or a member having a cubic shape such as a box or as a bottle, and it is preferable to use a film in a viewpoint of achieving a light weight container. Among the constituent materials, a film material having excellent durability in the case of using the member as a film is not particularly limited, and examples thereof include a plastic film such as polyethylene terephthalate (PET), polyethylene, polypropylene, polyamide-based fiber, an ethylene vinyl acetate copolymer, an ethylene vinyl alcohol copolymer, and polystyrene. Among these, polyethylene, polypropylene, polyamide-based fiber, an ethylene vinyl acetate copolymer, an ethylene vinyl alcohol copolymer, and polystyrene having high density, low density, or linear low density are preferable. The film material may be a laminated film or a stretched film. As the inorganic structure, glass or metal is used. The member may be a material at least including the metal oxide layer, a member mainly including the metal oxide layer as a constituent element, or a member only configured with the metal oxide layer, for example.

The degree of oxygen permeability of the member including the metal oxide layer of the container or the package is preferably equal to or less than 5.0 cc·20 $\mu$m/(m$^2$·day·atm), more preferably equal to or less than 2.0 cc·20 $\mu$m/(m$^2$·day·atm), and even more preferably equal to or less than 1.0 cc·20 $\mu$m/(m$^2$·day·atm). Since the degree of oxygen permeability is in the range described above, an amount of dissolved oxygen in the ink composition being stored hardly changes. The degree of oxygen permeability can be measured with a method based on JIS K7126 (ISO15105).

In order to improve the degree of oxygen permeability, the container or the package may include a gas barrier layer. The gas barrier layer is not particularly limited, and examples thereof include a metal layer such as an aluminum layer, or an organic layer such as an ethylene vinyl acetate copolymer or a polyvinyl alcohol layer.

The total thickness of the member of the container or the package is preferably equal to or greater than 50 $\mu$m, more preferably equal to or greater than 70 $\mu$m, and even more preferably equal to or greater than 100 $\mu$m. Since the total thickness of the container or the package is equal to or greater than 100 $\mu$m, moisture content and the amount of dissolved oxygen of the accommodated ink composition hardly changes and strength of the container or the package is obtained. The total thickness of the container or the package preferably equal to or less than 300 $\mu$m, more preferably equal to or less than 200 $\mu$m, and even more preferably equal to or less than 150 $\mu$m. Since the total thickness of the container or the package is equal to or less than 200 $\mu$m, the flexibility thereof is further improved.

The amount of the ink composition which can be accommodated in the container or the package is preferably from 100 mL to 5,000 mL, more preferably from 100 mL to 4,000 mL, even more preferably from 300 mL to 3,000 mL, and particularly preferably from 500 mL to 2,500 mL. Since the volume of the container or the package is in the range described above, after starting the use of the container or the package, it is possible to use all of the ink composition while the amount of dissolved oxygen in the ink in the container or the package does not substantially change, or the amount of dissolved oxygen in the ink composition being stored hardly changes.

The container or the package preferably has visible light transmission. The term "visible light" means light having a wavelength of 400 nm to 800 nm. The visible light transmittance is preferably equal to or greater than 40%, more preferably equal to or greater than 50%, and even more preferably equal to or greater than 60%, as an average transmittance in the range of the above wavelengths. Since the visible light transmittance is equal to or greater than 40%, visibility is further improved. The upper limit of the visible light transmittance is not particularly limited, but is preferably equal to or smaller than 100%. The visible light transmittance decreases by increasing the thickness of the structure configured with the metal oxide layer and other constituent materials, and increases by decreasing the thickness of the structure configured with the metal oxide layer and other constituent materials. The visible light transmittance can be measured with a method disclosed in Examples.

The moisture permeability of the container or the package is preferably equal to or less than 20 g/m$^2$·24 hours, more preferably equal to or less than 10 g/m$^2$·24 hours, and even more preferably equal to or less than 5.0 g/m$^2$·24 hours. Since the moisture permeability is equal to or less than 20 g/m$^2$·24 hours, it is possible to maintain the curing properties and the adhesiveness of the accommodated ink composition and the generation of foreign materials is prevented. In addition, the moisture permeability of the container or the package is preferably equal to or greater than 0.10 g/m$^2$·24 hours, more preferably equal to or greater than 0.20 g/m$^2$·24 hours, even more preferably equal to or greater than 1.0 g/m$^2$·24 hours, and further more preferably equal to or greater than 2.0 g/m$^2$·24 hours. Since the moisture permeability is preferably equal to or greater than 0.10 g/m$^2$·24 hours, the degree of freedom of the design of the member increases. The moisture permeability increases by decreasing the thickness of the member and decreases by increasing the thickness thereof. The moisture permeability can be measured with a method disclosed in Examples.

Non-Aqueous Photocurable Ink Jet Composition

The non-aqueous photocurable ink jet composition contains a polymerizable compound, a pigment, and a pigment dispersant, and the moisture absorption rate at a temperature of 60°C and relative humidity of 90% is from 0.3% by mass/24 hours to 2.0% by mass/24 hours.

The moisture absorption rate of the non-aqueous photocurable ink jet composition is from 0.30% by mass/24 hours to 2.0% by mass/24 hours, preferably from 0.50% by mass/24 hours to 1.5% by mass/24 hours, and more preferably from 0.50% by mass/24 hours to 1.0% by mass/24 hours. Since the moisture absorption rate of the non-aqueous photocurable ink jet composition is equal to or greater than 0.3% by mass/24 hours, the curing properties are further improved. In addition, since the moisture absorption rate of the non-aqueous photocurable ink jet composition is equal to or smaller than 2.0% by mass/24 hours, the generation of the foreign materials is further prevented. The moisture absorption rate can be controlled by adjusting the content of the component having a high moisture absorption rate, for example, the content of the polymerizable compound, but there is no limitation thereto. The moisture absorption rate can be measured with a method disclosed in the Examples.

Non-Aqueous System

The ink composition of the embodiment is non-aqueous. Specifically, content of water therein is preferably from 0% by mass to 1.0% by mass, more preferably from 0% by mass to 0.50% by mass, and even more preferably from 0% by mass to 0.30% by mass. Alternatively, the ink composition which does not substantially contain water is used.

Polymerizable Compound

The polymerizable compound is not particularly limited, and examples thereof include a well-known monofunctional, bifunctional, and tri- or higher polyfunctional monomer and oligomer of the related art. The polymerizable compound may be used alone or in combination of two or more kinds thereof. The examples of the polymerizable compound are shown hereinafter.

The monofunctional, bifunctional, and tri- or higher polyfunctional monomer is not particularly limited, and examples thereof include unsaturated carboxylic acid such as (meth)acrylic acid, itaconic acid, crotonic acid, isocrotonic acid, or maleic acid; salt of unsaturated carboxylic acid; ester, urethane, amide, and anhydride of unsaturated carboxylic acid; acrylonitrile; styrene; various unsaturated polyesters; unsaturated polyethers; unsaturated polyamides; and unsaturated urethanes. The monofunctional, bifunctional, and tri- or higher polyfunctional oligomer is not particularly limited, and examples thereof include an oligomer formed from the monomer described above such as a straight-chain acrylic oligomer, epoxy (meth)acrylate, oxetane (meth)acrylate, aliphatic urethane (meth)acrylate, aromatic urethane (meth)acrylate, and polyester (meth)acrylate.

As the other monofunctional monomer or polyfunctional monomer, an N-vinyl compound may be contained therein. The N-vinyl compound is not particularly limited, and examples thereof include N-vinyl formamide, N-vinyl carbazole, N-vinyl acetamide, N-vinyl pyrrolidone, N-vinyl caprolactam, acryloyl morpholine, and a derivative thereof.

Monofunctional (meth)acrylate is not particularly limited, and examples thereof include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, butoxyethyl (meth)acrylate, ethoxy diethylene glycol (meth)acrylate, methoxydiethylene glycol (meth)acrylate, methoxy polyethylene glycol (meth)acrylate, methoxy propylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, lactone-modified flexible (meth)acrylate, t-butyl cyclohexyl (meth)acrylate, dicyclopentanyl (meth)acrylate, and dicyclopentenyloxyethyl (meth)acrylate. Among these, phenoxyethyl (meth)acrylate is most preferable.

As (meth)acrylate, a material containing a vinyl ether group is used. The monofunctional (meth)acrylate is not particularly limited, and examples thereof include 2-(2-vinyloxyethoxy) ethyl (meth)acrylate, 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyethoxy)ethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, 2-(vinyloxy isopropoxy isopropoxy)ethyl (meth)acrylate, 2-(vinyloxyethoxy ethoxy)propyl (meth)acrylate, 2-vinyloxyethoxy isopropoxy)propyl (meth)acrylate, 2-(vinyloxy isopropoxyethoxy)propyl (meth)acrylate, 2-(vinyloxy isopropoxy isopropoxy)propyl (meth)acrylate, 2- (vinyloxyethoxy ethoxy)isopropyl (meth)acrylate, 2-(vinyloxyethoxy isopropoxy)isopropyl (meth)acrylate, 2-(vinyloxyisopropoxyethoxy)isopropyl (meth)acrylate, 2-(vinyloxy isopropoxy isopropoxy)isopropyl (meth)acrylate, 2-(vinyloxyethoxy ethoxyethoxy)ethyl (meth)acrylate, 2-(vinyloxyethoxy ethoxyethoxy)ethyl (meth)acrylate, 2-(isopropenoxy ethoxy) ethyl (meth)acrylate, 2-(isopropenoxy ethoxy ethoxy)ethyl (meth)acrylate, 2-(isopropenoxy ethoxy ethoxy ethoxy)ethyl (meth)acrylate, 2-(isopropenoxy ethoxy ethoxy ethoxy ethoxy)ethyl (meth)acrylate, polyethylene glycol monovinyl ether (meth)acrylate, polypropylene glycol monovinyl ether (meth)acrylate, phenoxyethyl (meth)acrylate, isobornyl (meth)acrylate, and benzyl (meth)acrylate. Among these, 2-(vinyloxyethoxy)ethyl (meth)acrylate, phenoxyethyl (meth)acrylate, isobornyl (meth)acrylate, and benzyl (meth)acrylate are most preferable.

Among the (meth)acrylates, bifunctional (meth)acrylate is not particularly limited, and examples thereof include triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanedioldi(meth)acrylate, neopentyl glycol di(meth)acrylate, dimethylol-tricyclodecane di(meth)acrylate, bisphenol A EO (ethylene oxide) adduct di(meth)acrylate, bisphenol A PO (propylene oxide) adduct di(meth)acrylate, hydroxypivalic acid neopentyl glycol di(meth)acrylate, polytetramethylene glycol di(meth)acrylate, diethylene glycol di(meth)acrylate, triethylene glycol di(meth)acrylate, and tri- or higher functional (meth)acrylate having a pentaerythritol skeleton or a dipentaerythritol skeleton. Among these, dipropylene glycol di(meth)acrylate is most preferable. Among them, dipropylene glycol di(meth)acrylate, tripropylene glycol di(meth)acrylate, diethylene glycol di(meth)acrylate, triethylene glycol di(meth)acrylate, and tri- or higher functional (meth)acrylate having a pentaerythritol skeleton or a dipentaerythritol skeleton are most preferable.

Among the (meth)acrylates, tri- or higher polyfunctional (meth)acrylate is not particularly limited, and examples thereof include trimethylolpropane tri(meth)acrylate, EO-modified trimethylolpropane tri(meth)acrylate, pentaerythritol tri(meth)acrylate, pentaerythritol tetra (meth)acrylate, dipentaerythritol hexa (meth)acrylate, ditrimethylolpropane tetra(meth)acrylate, glycerol propoxy tri(meth)acrylate, caprolactone-modified trimethylolpropane tri(meth)acrylate, pentaerythritol ethoxy tetra(meth)acrylate, caprolactam-modified dipentaerythritol hexa(meth)acrylate, and dipentaerythritol hexa(meth)acrylate.

Among these, it is preferable to use a polymerizable compound including one or more selected from a group consisting of oxygen atoms coupled with two acyclic hydrocarbon groups (hereinafter, also referred to as an "acyclic hydrocarbon group containing oxygen atoms"), a heterocyclic group containing oxygen atoms, and a hydroxyl group. In the embodiment, the functional group is also referred to as a hydrophilic group and such a polymerizable compound is also referred to as a hydrophilic polymerizable compound. Since such a polymerizable compound has a hydrophilic group having comparatively high water absorbability, the invention is particularly advantageous. The acyclic hydrocarbon group containing oxygen atoms is obtained by coupling an acyclic hydrocarbon group with two bonds of the oxygen atoms. The two acyclic hydrocarbon groups may be the same as each other or may be different from each other, and each of these is a monovalent or di- or higher valent saturated or unsaturated acyclic hydrocarbon group and 1 to 8 carbon atoms are preferable for each acyclic hydrocarbon group. The heterocyclic group containing oxygen atoms includes oxygen atoms as atoms configuring a heterocyclic ring. The heterocyclic ring is preferably a three- to eight-membered ring. The hydroxyl group is a hydroxyl group included in a molecule of the polymerizable compound. Examples of the polymerizable compound including an acyclic hydrocarbon group containing oxygen atoms include 2-(2-vinyloxyethoxy) ethyl acrylate and dipropylene glycol diacrylate, examples of the polymerizable compound including a heterocyclic group containing oxygen atoms include acryloyl morpholine and tetrahydrofurfuryl acrylate, and examples of the polymerizable compound including a hydroxyl group include 4-hydroxybutyl acrylate and 2-hydroxy-3-phenoxypropyl acrylate. As the acyclic hydrocarbon group containing oxygen atoms, an ether bond is used.

The polymerizable compound preferably includes a radical polymerizable compound and more preferably includes a hydrophilic radical polymerizable compound. Since the polymerizable compound includes a radical polymerizable compound, the curing properties thereof are further improved.

A Hydrophile-Lipophile Balance (HLB) value of the polymerizable compound is preferably equal to or greater than 8, more preferably equal to or greater than 9, and even more preferably equal to or greater than 10. Since the polymerizable compound having the HLB value equal to or greater than 8 has comparatively high water absorbability, the invention is particularly advantageous. An upper limit of the HLB value of the polymerizable compound is not particularly limited, but is preferably equal to or smaller than 13. The HLB value of this specification is acquired based on the Griffin method.

The ratio of molecular weight per molecule of the polymerizable compound to the number of hydrophilic groups per molecule of the polymerizable compound (molecular weight/ number of hydrophilic groups) is preferably equal to or greater than 30, more preferably equal to or greater than 50, and even more preferably equal to or greater than 90. Since the molecular weight/ number of hydrophilic groups of the polymerizable compound is equal to or greater than 30, the adhesiveness to a base is further improved. The molecular weight/ number of hydrophilic groups of the polymerizable compound is preferably equal to or smaller than 250, more preferably equal to or smaller than 200, and even preferably equal to or smaller than 100. Since the polymerizable compound having the molecular weight/ number of hydrophilic groups in the range described above has comparatively high water absorbability, the invention is particularly advantageous. The hydrophilic group is not particularly limited, and examples thereof include the oxygen atoms coupled with two acyclic hydrocarbon groups, a heterocyclic group containing oxygen atoms, and a hydroxyl group.

A ratio of the number of carbon atoms to the number of molecules per molecule of the polymerizable compound (number of carbon atoms/ number of hydrophilic groups) is preferably equal to or greater than 3, more preferably equal to or greater than 4, and even more preferably equal to or greater than 7. Since the number of carbon atoms/ number of hydrophilic groups of the polymerizable compound is equal to or greater than 3, the adhesiveness to a base is further improved. The number of carbon atoms/ number of hydrophilic groups in the polymerizable compound is preferably equal to or less than 13, more preferably equal to or less than 12, even more preferably equal to or less than 10, and further more preferably equal to or less than 8. Since the polymerizable compound having the carbon atoms/ number of hydrophilic groups equal to or less than 13 has comparatively high water absorbability, the invention is particularly advantageous.

The content of the specific polymerizable compound is preferably from 10% by mass to 90% by mass, more preferably equal to or greater than 20% by mass, even more preferably equal to or greater than 25% by mass, and further more preferably equal to or greater than 45% by mass, with respect to the total amount of the ink composition. In addition, the content of the specific polymerizable compound is preferably equal to or less than 85% by mass, more preferably equal to or less than 80% by mass, even more preferably equal to or less than 75% by mass, and further more preferably equal to or less than 70% by mass, with respect to the total amount of the ink composition. Since the content of the polymerizable compound is in the range described above, the moisture absorption rate of the composition easily falls in the range described above.

In addition, the content of the entire polymerizable compound contained in the ink composition is preferably equal to or greater than 70% by mass, with respect to the total amount of the ink composition.

Polymerization Initiator

The ink composition may further contain a polymerization initiator. The polymerization initiator is not particularly limited, and examples thereof include an acylphosphine oxide-based compound and a thioxanthone-based compound. Among these, the acylphosphine oxide-based compound is preferable. Since the acylphosphine oxide-based compound is included, the curing properties thereof are further improved.

Acylphosphine Oxide-Based Compound

The acylphosphine oxide-based compound easily exhibits oxygen inhibition, but in contrast, the curing properties in the case of emitting an ultraviolet light beam using a light emitting diode (LED) are further improved by using the acylphosphine oxide-based compound. A curing process using a UV-LED is more excellent with the combination of the acylphosphine oxide-based compound and the thioxanthone-based compound, and the curing properties and the adhesiveness of the ink composition are more excellent.

The acylphosphine oxide-based compound is not particularly limited, and examples thereof include bis(2,4,6-trimethyl benzoyl)-phenyl phosphine oxide, 2,4,6-trimethyl benzoyl-diphenyl-phosphine oxide, and bis-(2,6-dimethoxy benzoyl)-2,4,4-trimethyl pentyl phosphine oxide.

A commercially available product as the acylphosphine oxide-based compound is not particularly limited, and examples thereof include IRGACURE 819 (bis (2,4,6-trimethyl benzoyl)-phenyl phosphine oxide) and DAROCUR TPO (2,4,6-trimethyl benzoyl-diphenyl-phosphine oxide).

Content of the acylphosphine oxide-based compound is preferably from 5.0% by mass to 15.0% by mass, more preferably from 6.0% by mass to 14.0% by mass, and even more preferably from 7.0% by mass to 10.0% by mass, with respect to the total mass of the ink composition. Since the content of the acylphosphine oxide-based compound is equal to or greater than 5.0% by mass, the curing properties are more excellent. In addition, since the content of the acylphosphine oxide-based compound is equal to or less than 15.0% by mass, the amount of residual unmelted photopolymerization initiator is decreased, and coloring of the ink or yellow discoloration of a coated film due to the photopolymerization initiator is decreased.

Thioxanthone-Based Compound

Since the thioxanthone-based compound is included, it is possible to decrease surface tackiness, and it is particularly possible to prevent color mixture and bleeding between dots by curing the ink surface, in the case of using a thin film which can easily exhibit oxygen inhibition.

The thioxanthone-based compound is not particularly limited, and examples thereof preferably include one or more selected from a group consisting of thioxanthone, diethyl thioxanthone, isopropyl thioxanthone, and chlorothioxanthone. Although not particularly limited, an example of diethyl thioxanthone preferably includes 2,4-diethyl thioxanthone, an example of isopropyl thioxanthone preferably includes 2-isopropyl thioxanthone, and an example of chlorothioxanthone preferably includes 2-chloro thioxanthone. When the ink composition containing the thioxanthone-based compound is used, the curing properties, the storage stability, and discharge stability are more excellent. Among these, the thioxanthone-based compound containing diethyl thioxanthone is preferable. Since the diethyl thioxanthone is included, an ultraviolet light (UV light) beam in a wide range can be efficiently converted into active species.

A commercially available product as the thioxanthone-based compound is not particularly limited, and examples thereof include Speedcure DETX (2,4-diethyl thioxanthone), Speedcure ITX (2-isopropyl thioxanthone) (all manufactured by Lambson Ltd.), and KAYACURE DETX-S (2,4-diethyl thioxanthone) (manufactured by Nippon Kayaku Co., Ltd.)

Content of the photopolymerization initiator is preferably from 5.0% by mass to 20% by mass, more preferably from 5.0% by mass to 15% by mass, and even more preferably from 7% by mass to 13% by mass, with respect to the total mass of the ink composition. Since the total content of the polymerization initiator is equal to or greater than 5.0% by mass, it is possible to decrease a surface tackiness, and it is possible to prevent color mixture and bleeding between dots by curing the ink surface, in the case of using a thin film which can easily exhibit oxygen inhibition. In addition, since the total content of the polymerization initiator is equal to or less than 20% by mass, coloring of the ink due to the initiator is decreased, and yellow discoloration of a hue is decreased, or the amount of residual unmelted initiator is decreased.

Pigment and Pigment Dispersant

The ink composition includes a pigment and a pigment dispersant. Since the pigment and the pigment dispersant easily cause generation of foreign materials due to moisture absorption, the invention is particularly advantageous.

Pigment

The pigment used in black ink is not particularly limited, and examples thereof include No. 2300, No. 900, MCF88, No. 33, No. 40, No. 45, No. 52, MA7, MA8, MA100, and No. 2200B (all manufactured by Mitsubishi Chemical Corporation), Raven 5750, Raven 5250, Raven 5000, Raven 3500, Raven 1255, and Raven 700 (all manufactured by Carbon Columbia), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all manufactured by CABOT JAPAN K.K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa).

The pigment used in white ink is not particularly limited, and examples thereof include C.I. Pigment White 6, 18, and 21, titanium oxide, zinc oxide, zinc sulfide, antimony oxide, zirconium oxide, white hollow resin particles and polymer particles.

The pigment used in yellow ink is not particularly limited, and examples thereof include C.I. Pigment Yellow, 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

The pigment used in magenta ink is not particularly limited, and examples thereof include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, and 245, and C.I. Pigment Violet 19, 23, 32, 33, 36, 38, 43, and 50.

The pigment used in cyan ink is not particularly limited, and examples thereof include C.I. Pigment Blue 1, 2, 3, 15, 15:1, 15:2, 15:3, 15:34, 15:4, 16, 18, 22, 25, 60, 65, and 66, and C.I. Vat Blue 4 and 60.

The other pigments are not particularly limited, and examples thereof include C.I. Pigment Green 7 and 10, C.I. Pigment Brown 3, 5, 25, and 26, and C.I. Pigment Orange 1, 2, 5, 7, 13, 14, 15, 16, 24, 34, 36, 38, 40, 43, and 63.

Pigment Dispersant

The pigment may be a dispersible pigment. As a dispersion method of the pigment, a pigment dispersant is used, for example.

The pigment dispersant is not particularly limited, and examples thereof include polyvinyl alcohols; polyvinyl pyrrolidones; an acrylic resin represented by polyacrylic acid, an acrylic acid-acrylonitrile copolymer, a potassium acrylate-acrylonitrile copolymer, a vinyl acetate-acrylic ester copolymer, or an acrylic acid-acrylic acid alkyl ester copolymer; a styrene-acrylic resin represented by a styrene-acrylic acid copolymer, a styrene-methacrylic acid copolymer, a styrene-methacrylic acid-alkyl acrylate copolymer, a styrene-$\alpha$-methyl styrene-acrylic acid copolymer, or a styrene-$\alpha$-methyl styrene-acrylic acid-alkyl acrylic acid ester copolymer; a styrene-maleic acid copolymer; a styrene-maleic anhydride copolymer; a vinyl naphthalene-acrylic acid copolymer; a vinyl naphthalene-maleic acid copolymer; a vinyl acetate copolymer represented by a vinyl acetate-ethylene copolymer, a vinyl acetate-fatty acid vinyl ethylene copolymer, a vinyl acetate-maleic acid ester copolymer, a vinyl acetate-crotonic acid copolymer, a vinyl acetate-acrylic acid copolymer or salts thereof; proteins represented by glue, gelatin, casein, or albumin; natural gums represented by gum arabic or gum tragacanth; glycosides represented by saponin; alginic acid derivatives represented by alginic acid and propylene glycol alginate, triethanolamine alginate, or ammonium alginate; and cellulose derivatives represented by methyl cellulose, carboxymethyl cellulose, hydroxyethyl cellulose, or ethyl hydroxyethyl cellulose. The pigment dispersant may be used alone or in combination of two or more kinds thereof.

Polymerization Inhibitor

The ink composition of the embodiment may contain a polymerization inhibitor. The polymerization inhibitor is not particularly limited, and examples thereof include hydroquinones represented by hydroquinone, hydroquinone monomethyl ether (MEHQ), 1-o-2,3,5-trimethyl hydroquinone, or 2-tert- butylhydroquinone; catechols represented by catechol, 4-methyl catechol, or 4-tert-butylcatechol; phenols represented by phenol, butyl hydroxy toluene, butyl hydroxy anisole, p-methoxy phenol, cresol, pyrogallol, 3,5-di-t-butyl-4-hydroxytoluene, 2,2'-methylenebis (4-methyl-6-t-butylphenol), 2,2'-methylenebis (4-ethyl-6-butylphenol), and 4,4'-thiobis (3-methyl-6-t-butylphenol); hindered amines represented by a compound having a 2,2,6,6-tetramethyl piperidine oxyl skeleton represented by 4-hydroxy-2,2,6,6-tetramethyl piperidinyl-1-oxyl, a compound having a 2,2,6,6-tetramethyl piperidine skeleton, a compound having a 2,2,6,6-tetramethylpiperidine-N-alkyl skeleton, and a compound having a 2,2,6,6-tetramethylpiperidine-N-acyl skeleton. The polymerization inhibitor may be used alone or in combination of two or more kinds thereof.

Content of the polymerization inhibitor is preferably from 0.10% by mass to 1.0% by mass, more preferably from 0.10% by mass to 0.50% by mass, and even more preferably from 0.10% by mass to 0.30% by mass, with respect to the total mass of the ink composition. Since the content of the polymerization inhibitor is equal to or greater than 0.10% by mass, the storage stability thereof is further improved. In addition, since the content of the polymerization inhibitor is equal to or smaller than 1.0% by mass, the curing properties thereof are further improved.

Recording Method

A recording method of the embodiment includes a liquid delivery step of delivering the non-aqueous photocurable ink jet composition containing the polymerizable compound of which the moisture absorption rate at a temperature of 60°C and relative humidity of 90% is equal to or greater than 1.5% by mass/24 hours, to discharge nozzles from the non-aqueous photocurable ink jet composition storage body through ink flow paths, and a discharge step of discharging the non-aqueous photocurable ink jet composition to a recording medium from the discharge nozzles.

Liquid Delivering Step

The liquid delivery step is a step of delivering the non-aqueous photocurable ink jet composition to the discharge nozzles from the non-aqueous photocurable ink jet composition through the ink flow paths. The "ink flow paths" herein are flow paths for causing the ink to flow in the ink jet recording apparatus. Examples of the ink flow path include an ink supply path for supplying the ink to an ink jet-type recording head from an ink accommodation container storing the ink, or a flow path for causing the ink to flow to nozzle openings in the ink jet-type recording head. As the liquid delivering step, a well-known method in the related art can be used.

Discharge Step

The discharge step is a step of discharging the non-aqueous photocurable ink jet composition to the recording medium from the discharge nozzles.

Curing Step

The recording method of the embodiment may further include a curing step. The curing step is a step of irradiating the non-aqueous photocurable ink jet composition attached to the recording medium with the ultraviolet light beam having an emission peak wavelength of 350 nm to 420 nm using an LED and curing the non-aqueous photocurable ink jet composition. By using the LED, it is possible to realize miniaturization and long life of the ink jet recording apparatus and high efficiency and low cost of the ink jet recording method, compared to the case of using a metal halide light source or a mercury lamp.

Examples

Hereinafter, the first aspect of the invention will be described in detail using examples and comparative examples. The invention is not limited to the following examples.

Material for Ink Composition

Main materials for the ink composition used in the following examples and the comparative examples are as follows.

*Polymerizable compound*

*Trifunctional Monomer*

SR444 (pentaerythritol triacrylate, manufactured by Sartomer)

*Bifunctional Monomer*

VEEA (2-(2-vinyloxyethoxy) ethyl acrylate, manufactured by Nippon Shokubai Co., Ltd.) SR508 (dipropylene glycol diacrylate, manufactured by Sartomer)
V#230 (1,6-hexanediol diacrylate, manufactured by Osaka Organic Chemical Industry Ltd.) KAYARAD R-684 (dimethylol-tricyclodecanedimethanol acrylate, manufactured by Nippon Kayaku Co., Ltd.)

*Monofunctional Monomer*

ACMO (acryloyl morpholine, manufactured by KOHJIN Film & Chemicals Co., Ltd.)
4HBA (4-hydroxybutyl acrylate, manufactured by Osaka Organic Chemical Industry Ltd.) V#150 (tetrahydrofurfuryl acrylate, manufactured by Osaka Organic Chemical Industry Ltd.) DA141 (2-hydroxy-3-phenoxypropyl acrylate, manufactured by Nagase ChemteX Corporation) V#192 (phenoxyethyl acrylate, manufactured by Osaka Organic Chemical Industry Ltd.)
IBXA (isobornyl acrylate, manufactured by Osaka Organic Chemical Industry Ltd.)

*Surfactant*

BYK3500 (silicone surfactant, manufactured by BASF)

Polymerization inhibitor

MEHQ (p-methoxyphenol, manufactured by Kanto Chemical Co., Inc.)
LA7RD (4-hydroxy-2,2,6,6-tetramethyl piperidinyl-1-oxyl, manufactured by ADEKA)

*Polymerization Initiator*

Hostalux KCB (manufactured by Clariant)
IRGACURE 819 (manufactured by BASF)
Speedcure TPO (manufactured by Lambson Ltd.)
Speedcure DETX (manufactured by Lambson Ltd.)

*Pigment*

PR122 (C.I. Pigment Red 122)
Titanium oxide

*Pigment Dispersant*

BYK180 (manufactured by BYK) for a white pigment

Solsperse 36000 (manufactured by Lubrizol Corporation) for a magenta pigment

Preparation of Ink Composition

Each material was mixed with a composition shown in Table 1, and sufficiently stirred to obtain Ink Compositions 1 to 9. The unit of numerical values in Table 1 is % by mass and the total is 100.0% by mass.

Measurement Method of Moisture Absorption Rate of Polymerizable Compound

In a state where a sample bottle (13.5 mL) with 7 mL of the polymerizable compound added thereto was not covered with a lid, the sample bottle was stood up in a disposable cup (200 mL) with 50 cc of water added thereto and the upper portion of the disposable cup was wrapped with Saran Wrap (product name). The disposable cup was stood up with the thermostat set at 60°C for 24 hours and a moisture absorption sample was prepared. After the moisture absorption occurs, the sample bottle was wrapped, and the amount of moisture contained in the polymerizable compound was measured using a Karl Fischer moisture meter (minute amount moisture measurement apparatus, AQ-2200, manufactured by Hiranuma Sangyo Co., Ltd.) The amount by which the moisture was increased after the moisture absorption test was calculated with the following equation and the moisture absorption rate was acquired.

Moisture absorption rate = (amount of moisture after moisture absorption - amount of moisture before moisture absorption)/ mass of polymerizable compound before moisture absorption x 100

Table 1

| Classification | Product name | Number of Hydrophilic groups | Number of carbon atoms/ Number of hydrophilic groups | Molecular weight/ Number of hydrophilic groups | HLB value | Moisture absorption rate [% by mass/24h] | Ink composition | | | | | | | | |
|---|---|---|---|---|---|---|---|---|---|---|---|---|---|---|---|
| | | | | | | | 1 | 2 | 3 | 4 | 5 | 6 | 7 | 8 | 9 |
| Trifunctional monomer | SR444 | 0 | 14 | 298 | 10 | 0.84% | | | | | 5.55 | | | 2.00 | |
| Bifunctional monomer | VEEA | 2 | 4.5 | 93 | 11.18 | 1.98% | 65.00 | 37.00 | 20.00 | 53.00 | 48.00 | 20.00 | 10.00 | | 65.00 |
| | SR508 | 1 | 12 | 242 | 9.75 | 1.89% | | | 28.00 | | | | | | |
| | V#230 | 0 | - | - | 7.78 | 1.18% | | | | | | 20.00 | 20.00 | 2.00 | |
| | KAYARAD R-684 | 0 | - | - | 5.79 | 0.47% | | 11.65 | | | | | | 2.00 | |
| Monofunctional monomer | ACMO | 1 | 7 | 141 | 12.62 | 10.86% | | | | | | | 2.00 | | |
| | 4HBA | 1 | 7 | 144 | 8.47 | 10.71% | | 30.00 | | | | | | | |
| | V#150 | 1 | 8 | 156 | 9.49 | 4.18% | | | | 10.00 | | | 10.00 | | |
| | DA141 | 1 | 12 | 222 | 8.2 | 2.10% | | 3.00 | | | | | | | |
| | V#192 | 0 | - | - | 7.71 | 0.64% | 16.00 | 10.00 | 33.00 | 18.00 | 18.00 | 41.00 | 34.00 | 18.00 | 12.00 |
| | IBXA | 0 | - | - | 4.23 | 0.18% | | | | | | | 5.00 | 57.00 | |
| Surfactant | BYK3500 | | | | | | 0.20 | 0.20 | 0.20 | 0.20 | 0.20 | 0.20 | 0.20 | 0.20 | 0.20 |
| Polymerization inhibitor | MEHQ | | | | | | 0.20 | 0.10 | 0.20 | 0.20 | 0.35 | 0.20 | 0.20 | 0.20 | 0.20 |
| | LA7RD | | | | | | 0.20 | | | 0.20 | 0.05 | 0.20 | 0.20 | 0.20 | 0.20 |
| Polymerization initiator | Hostalux KCB | | | | | | 0.20 | 0.25 | 0.20 | 0.20 | 0.05 | 0.20 | 0.20 | 0.20 | 0.20 |
| | Irgacure 819 | | | | | | 5.00 | 3.00 | 5.20 | 5.00 | 2.30 | 5.00 | 5.00 | 5.00 | 7.00 |
| | Speedcure TPO | | | | | | 4.80 | 4.80 | 4.80 | 4.80 | 4.80 | 4.80 | 4.80 | 4.80 | 6.80 |
| | Speedcure DETX | | | | | | 3.00 | | 3.00 | 3.00 | 0.50 | 3.00 | 3.00 | 3.00 | 3.00 |
| Pigment | PR122 | | | | | | 5.20 | | 5.20 | 5.20 | | 5.20 | 5.20 | 5.20 | 5.20 |
| | Titanium oxide | | | | | | | | | | 18.00 | | | | |

EP 2 923 843 A1

(continued)

| Classification | Product name | Number of Hydrophilic groups | Number of carbon atoms/ Number of hydrophilic groups | Molecular weight/ Number of hydrophilic groups | HLB value | Moisture absorption rate [% by mass/24h] | Ink composition | | | | | | | | |
|---|---|---|---|---|---|---|---|---|---|---|---|---|---|---|---|
| | | | | | | | 1 | 2 | 3 | 4 | 5 | 6 | 7 | 8 | 9 |
| Pigment dispersant | BYK180 | | | | | | | | | | 2.20 | | | | |
| | Solsperse36000 | | | | | | 0.20 | | 0.20 | 0.20 | | 0.20 | 0.20 | 0.20 | 0.20 |
| Total | | | | | | | 100.00 | 100.00 | 100.00 | 100.00 | 100.00 | 100.00 | 100.00 | 100.00 | 100.00 |
| Total amount of hydrophilic polymerizable compound | | | | | | | 65.00 | 70.00 | 48.00 | 63.00 | 48.00 | 20.00 | 22.00 | 0.00 | 65.00 |

Preparation of Container

As a base, a low-density polyethylene film having a thickness of 80 μm was used. Pretreatment of reactive ion etching was performed on one surface of the PET film using a plasma treatment machine. At that time, a high frequency power source was used for an electrode and an atmosphere was set to an argon/oxygen mixed gas atmosphere. Next, a film was obtained by performing vapor deposition of silica having a thickness of 50 nm on the surface subjected to the pretreatment of reactive ion etching, with a vapor deposition apparatus using an electron beam heating system. After that, a container 1 for accommodating the ink composition was prepared using the obtained film.

A container 2 for accommodating the ink composition was prepared, in the same manner as in the preparation of the container 1, except for performing the vapor deposition of aluminum oxide having a thickness of 50 nm. A container 3 for accommodating the ink composition was prepared, in the same manner as in the preparation of the container 1, except for using a biaxially stretched polyethylene terephthalate (PET) film having a thickness of 12 μm and not including a metal oxide layer, as a base. A container 4 for accommodating the ink composition was prepared, in the same manner as in the preparation of the container 1, except for performing the vapor deposition of aluminum having a thickness of 50 nm.

Moisture Permeability

The moisture permeability of the containers 1 to 4 was measured using JIS K 7129 Plastics-Film and Sheeting-Determination of water vapor transmission rate (gas chromatograph method). First, a low-humidity chamber and a high-humidity chamber were separated by a test piece. In the gas chromatograph method, gas in the low-humidity chamber was exhausted with a vacuum pump, gas controlled to a constant relative humidity was caused to flow to the high-humidity chamber, water vapor transmitted by the test piece was collected in a measuring glass for a given time, the amount of the collected water vapor was measured with a gas chromatograph, and the water vapor transmission rate was calculated.

Oxygen Transmission Rate

The oxygen transmission rate of the containers 1 to 4 was measured using JIS K 7126 Plastics-Film and Sheeting-Determination of gas transmission rate (gas chromatograph method). One side (low pressure side) separated by the test piece was held in a vacuum state, test gas was introduced to the other side (high pressure side), the amount of gas transmitted towards the low pressure side through the test piece was measured by the gas chromatograph method, and the gas transmission rate was calculated.

Evaluation of Foreign Materials

Each of the ink compositions was sealed in a container prepared as described above, and the container was stored at a temperature of 60°C, and a relative humidity of 90% for 7 days. The stored container was accommodated in an ink cartridge which is the package, and the cartridge was mounted on a printer (PX-G5000, manufactured by Seiko Epson Corporation). After that, the ink composition in the storage body was continuously discharged from a head including 360 nozzles for 10 minutes. At that time, the ink temperature in the head was adjusted so that the viscosity of the ink composition becomes 10 mPa·s. After the discharging, the nozzles were inspected and the number of non-discharging nozzles was counted. Based on the number of non-discharging nozzles, the generation of the foreign materials due to the storage thereof was evaluated according to the following evaluation criteria. When the generation of the foreign materials was evaluated as B, residual materials considered as the foreign materials were found when the ink composition in the storage body was filtered with filter paper.

    A: The number of non-discharging nozzles was equal to or less than 1.
    B: The number of non-discharge nozzles was equal to or greater than 2.

Curing Properties

Each of the ink compositions was sealed in a container prepared as described above, and the container was stored at a temperature of 60°C, and a relative humidity of 90% for 7 days. The stored container was accommodated in an ink cartridge which is the package, and the cartridge was mounted on a printer (PX-G5000, manufactured by Seiko Epson Corporation). Then, the ink composition in the storage body was discharged from a head including 360 nozzles and attached to a recording medium. After that, the ink composition on the recording medium was irradiated with an ultraviolet light beam at an accumulated energy of 200 mJ/cm$^2$, and a coated film having a thickness of 10 μm was

obtained.

A coated film of the ink composition irradiated with the ultraviolet light beam was rubbed with a cotton swab and scratches or stains were checked for on the cotton swab. Based on the scratches or stains on the cotton swab, the curing properties were evaluated according to the following evaluation criteria.

AA: No scratches or stains on the cotton swab were observed when the accumulated energy was 150 mJ/cm$^2$.
A: No scratches or stains on the cotton swab were observed when the accumulated energy was 200 mJ/cm$^2$, but scratches or stains on the cotton swab were observed when the accumulated energy was 150 mJ/cm$^2$.
B: Scratches or stains on the cotton swab were observed even when the accumulated energy was 200 mJ/cm$^2$.

Adhesiveness

Each of the ink compositions was sealed in the container prepared as described above, and the container was stored at a temperature of 60°C, and a relative humidity of 90% for 7 days. The stored container was accommodated in an ink cartridge which is the package, and the cartridge was mounted on a printer (PX-G5000, manufactured by Seiko Epson Corporation). Then, the ink composition in the storage body was discharged from a head including 360 nozzles and attached to a recording medium. After that, the ink composition on the recording medium was irradiated with an ultraviolet light beam at an accumulated energy of 200 mJ/cm$^2$, and a coated film having a thickness of 10 μm was obtained.

A single cutting tool (a generally commercially available cutter) and a guide for cutting at regular intervals using the single cutting tool were prepared. First, the blade of the cutting tool was placed vertically with respect to the coated film and six cuts parallel to each other were made on the recorded matter. After making the six cuts, the coated film was rotated by 90°, and six cuts were made vertically with respect to the previous cuts. As described above, the coated film having cuts in a lattice shape was obtained. Then, transparent adhesive tape (width of 25 ± 1 mm) was extracted to have a length of approximately 75 mm, the tape was adhered to a part of the lattice-shaped cuts made on the coated film, and the tape was sufficiently adhered with fingers so that the coated film was seen through the tape. Next, the tape was peeled from the coated film for 0.5 seconds to 1.0 seconds, at an angle close to 60°, within 5 minutes after adhering the tape. Based on the peeling of the coated film at this time from the recording medium, the adhesiveness was evaluated according to the following evaluation criteria.

A: No peeling was observed.
B: The peeling was observed.

Visibility

The average transmittance of the containers prepared as described above in a visible light area of 400 nm to 800 nm was measured with a spectrophotometer (product name: U-3300 spectrophotometer, manufactured by Hitachi, Ltd.) The visibility was evaluated based on the obtained transmittance.

A: The transmittance was equal to or greater than 40%.
B: The transmittance was smaller than 40%.

Viscosity

The viscosity of each prepared ink composition at 20°C was measured with a viscometer (product name: MCR-300, manufactured by Physica) and the viscosity was evaluated according to the following evaluation criteria. A shear velocity was set to 200 s$^{-1}$ using a cone (diameter of 75 mm and angle of 1°).

AA: The viscosity was equal to or less than 15 mPa·s.
A: The viscosity was greater than 15 mPa·s and less than 20 mPa·s.
B: The viscosity was equal to or greater than 20 mPa·s.

Examples 1 to 9 and Comparative Examples 1 to 6

Any one of the ink compositions 1 to 9 was accommodated and sealed in any one of the containers (packs) 1 to 4, and the storage body including the ink composition sealed in the container was obtained. The combinations of the ink compositions and the containers are as shown in Table 2.

Table 2

| | | Examples | | | | | | | | | Comparative examples | | | | | |
|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 |
| Ink composition | | 1 | 1 | 2 | 3 | 4 | 5 | 6 | 7 | 9 | 1 | 8 | 2 | 1 | 8 | 9 |
| Pack | Container 1 (water vapor transmission rate: 5 g/m$^2$·24h) | ○ | | ○ | ○ | ○ | ○ | ○ | ○ | ○ | | | | | ○ | |
| | Container 2 (water vapor transmission rate: 5 g/m$^2$·24h) | | ○ | | | | | | | | | | | | | |
| | Container 3 (water vapor transmission rate: 25 g/m$^2$·24h) | | | | | | | | | | ○ | ○ | ○ | | | ○ |
| | Container 4 (water vapor transmission rate: 0.1 g/m$^2$·24h) | | | | | | | | | | | | | ○ | | |
| Evaluation | Evaluation of foreign materials | A | A | A | A | A | A | A | A | A | B | A | A | A | A | B |
| | Curing properties | AA | AA | AA | AA | A | AA | A | A | AA | B | B | B | AA | B | A |
| | Adhesiveness | A | A | A | A | A | A | A | A | A | B | A | B | A | A | B |
| | Viscosity | AA | AA | AA | A | AA | AA | A | A | AA | AA | B | AA | AA | B | AA |
| | Visibility | A | A | A | A | A | A | A | A | A | A | A | A | B | A | A |

EP 2 923 843 A1

In Comparative Examples 1 to 3 and 6, since the container does not include the metal oxide layer, the curing properties were decreased due to the moisture absorption, and in Comparative Example 1, the generation of the foreign materials was observed. In Comparative Example 2, the ink composition having relatively low moisture absorbing properties was obtained, and since the container does not include the metal oxide layer, the curing properties were deteriorated. In Comparative Example 4, since the container includes the metal layer instead of the metal oxide layer, visibility was degraded. In Comparative Example 5, the container included the metal oxide layer, but since the total amount of hydrophilic polymerizable compound was low and a comparatively hydrophilic ink composition was obtained, the curing properties were deteriorated. In Comparative Example 6, the content of the acylphosphine oxide-based compound of the ink composition was high and the curing properties were improved, unlike in Comparative Example 1, but the foreign materials caused by the acyl phosphine oxide-based compound were observed as residual materials. Therefore, it was determined that the invention is advantageous, since it is possible to decrease the generation of foreign materials caused by the acyl phosphine oxide-based compound while obtaining the composition having further improved curing properties using the acyl phosphine oxide-based compound.

Hereinafter, the second aspect of the invention will be described in detail using examples and comparative examples. The invention is not limited to the following examples.

Material for Ink Composition

Main materials for the ink composition used in the following examples and the comparative examples are as follows.

*Polymerizable compound*

*Hexafunctional Monomer*

DPHA (dipentaerythritol hexaacrylate, manufactured by Shin-Nakamura Chemical Co., Ltd.)

*Bifunctional Monomer*

VEEA (2-(2-vinyloxyethoxy) ethyl acrylate, manufactured by Nippon Shokubai Co., Ltd.)
SR508 (dipropylene glycol diacrylate, manufactured by Sartomer)

*Monofunctional Monomer*

ACMO (acryloyl morpholine, manufactured by KOHJIN Film & Chemicals Co., Ltd.)
PEA (phenoxyethyl acrylate, manufactured by Osaka Organic Chemical Industry Ltd.)
IBXA (isobornyl acrylate, manufactured by Osaka Organic Chemical Industry Ltd.)

*Surfactant*

BYK3500 (silicone surfactant, manufactured by BYK)

Polymerization inhibitor

MEHQ (p-methoxyphenol, manufactured by Kanto Chemical Co., Inc.)
LA7RD (4-hydroxy-2,2,6,6-tetramethyl piperidinyl-1-oxyl, manufactured by ADEKA)

*Polymerization Initiator*

IRGACURE 819 (manufactured by BASF)
Speedcure TPO (manufactured by Lambson Ltd.)
Speedcure DETX (manufactured by Lambson Ltd.)

*Pigment*

PR122 (C.I. Pigment Red 122)
Titanium oxide

*Pigment Dispersant*

BYK180 (manufactured by BYK) for a white pigment

Solsperse 36000 (manufactured by Lubrizol Corporation) for a magenta pigment

Preparation of Ink Composition

Each material was mixed with a composition shown in Table 3, and sufficiently stirred to obtain Ink Compositions 1 to 6. The unit of numerical values in Table 3 is % by mass and the total is 100.0% by mass.

Measurement Method of Moisture Absorption Rate of Ink Composition

In a state where a sample bottle (13.5 mL) with 7 mL of the ink composition added thereto was not covered with a lid, the sample bottle was stood up in a disposable cup (200 mL) with 50 cc of water added thereto and the upper portion of the disposable cup was wrapped with Saran Wrap (product name). The disposable cup was stood up with the thermostat set at 60°C for 24 hours and a moisture absorption sample was prepared. After the moisture absorption, the sample bottle was closed, and the amount of moisture contained in the ink composition was measured using a Karl Fischer moisture meter (minute amount moisture measurement apparatus, AQ-2200, manufactured by Hiranuma Sangyo Co., Ltd.) The amount by which the moisture was increased after the moisture absorption test, was calculated with the following equation and the moisture absorption rate was acquired.

Moisture absorption rate = (amount of moisture after moisture absorption - amount of moisture before moisture absorption)/ mass of ink composition before moisture absorption x 100

Table 3

| Ink composition No. | | Composition 1 | Composition 2 | Composition 3 | Composition 4 | Composition 5 | Composition 6 | Composition 7 |
|---|---|---|---|---|---|---|---|---|
| Hexafunctional monomer | DPHA | 8.6 | | | 8.6 | | | 8.6 |
| Bifunctional monomer | VEEA | 45.0 | 67.0 | | 20.0 | 38.6 | | 45.0 |
| | SR508 | | 12.6 | | 5.0 | | | |
| Monofunctional monomer | ACMO | | 2.0 | | | 30.0 | 53.6 | |
| | IBXA | | 1.0 | 53.6 | | | | |
| | PEA | 15.0 | | 15.0 | 35.0 | | 15.0 | 11.0 |
| Surfactant | BYK3500 | 0.2 | 0.2 | 0.2 | 0.2 | 0.2 | 0.2 | 0.2 |
| Polymerization inhibitor | MEHQ | 0.1 | 0.1 | 0.1 | 0.1 | 0.1 | 0.1 | 0.1 |
| | LA7RD | 0.1 | 0.1 | 0.1 | 0.1 | 0.1 | 0.1 | 0.1 |
| Polymerization initiator | Irgacure 819 | 5.0 | 5.0 | 5.0 | 5.0 | 5.0 | 5.0 | 7.0 |
| | Speedcure TPO | 4.0 | 4.0 | 4.0 | 4.0 | 4.0 | 4.0 | 6.0 |
| | Speedcure DETX | 2.0 | 2.0 | 2.0 | 2.0 | 2.0 | 2.0 | 2.0 |
| Pigment dispersant | | 2.0 | 2.0 | 2.0 | 2.0 | 2.0 | 2.0 | 2.0 |
| Pigment | Titanium oxide | 18.0 | | 18.0 | 18.0 | 18.0 | 18.0 | 18.0 |
| | PR122 | | 4.0 | | | | | |
| Total | | 100 | 100 | 100 | 100 | 100 | 100 | 100 |
| Moisture absorption rate [% by mass/24h] | | 1.00 | 1.79 | 0.20 | 0.73 | 4.03 | 5.93 | 1.00 |
| Content (%) of polymerizable compound including one or more selected from a group consisting of an acyclic hydrocarbon group containing oxygen atoms, a heterocyclic group containing oxygen atoms, and a hydroxyl group. | | 45.0 | 81.6 | 0.0 | 25.0 | 68.6 | 53.6 | 45.0 |

EP 2 923 843 A1

Preparation of Container

As a base, a low-density polyethylene film having a thickness of 80 μm was used. Pretreatment of reactive ion etching was performed on one surface of the PET film using a plasma treatment machine. At that time, a high frequency power source was used for an electrode and an atmosphere was set to an argon/oxygen mixed gas atmosphere. Next, a film was obtained by performing vapor deposition of silica having a thickness of 50 nm on the surface subjected to the pretreatment of reactive ion etching, with a vapor deposition apparatus by an electron beam heating system. After that, a container 1 for accommodating the ink composition was prepared using the obtained film.

A container 2 accommodating the ink composition was prepared using a biaxially stretched polyethylene terephthalate (PET) film having a thickness of 12 μm which does not include a metal oxide layer. A container 3 was prepared, in the same manner as described above, except for performing the vapor deposition of aluminum having a thickness of 50 nm. A container 4 was prepared, in the same manner as described above, except for performing the vapor deposition of aluminum oxide having a thickness of 50 nm.

Moisture Permeability

The moisture permeability of the containers 1 to 4 was measured using JIS K 7129 Plastics-Film and Sheeting-Determination of water vapor transmission rate (gas chromatograph method). First, a low-humidity chamber and a high-humidity chamber were isolated from each other by a test piece. In the gas chromatograph method, gas in the low-humidity chamber was exhausted with a vacuum pump, gas controlled to a constant relative humidity was caused to flow to the high-humidity chamber, water vapor transmitted by the test piece was collected in a measuring glass for a given time, the amount of the collected water vapor was measured with a gas chromatograph, and the water vapor transmission rate was calculated.

Oxygen Transmission Rate

The oxygen transmission rate of the containers 1 to 4 was measured using JIS K 7126 Plastics-Film and Sheeting-Determination of gas transmission rate (gas chromatograph method). One side (low pressure side) separated by the test piece was held in a vacuum state, test gas was introduced to the other side (high pressure side), the amount of gas transmitted towards the low pressure side through the test piece was measured by the gas chromatograph method, and the gas transmission rate was calculated.

Evaluation of Foreign Materials

Each of the ink compositions was sealed in the container prepared as described above, and the container was stored at a temperature of 25°C, and a relative humidity of 45% for a predetermined period. The stored ink composition was visually observed, and the generation of the foreign materials due to the storage was evaluated according to the following evaluation criteria. Regarding the ink in which the generation of the foreign materials was evaluated as B and C, residual materials considered as the foreign materials were found, when the ink composition in the storage body was filtered with filter paper.

A: No generation of the foreign materials was observed when the ink was kept for 12 months.
B: No generation of the foreign materials was observed when the ink was kept for 6 months, but the generation of the foreign materials was observed when the ink was kept for 12 months.
C: The generation of the foreign materials was observed when the ink was kept for 6 months.

Curing Properties

Each of the ink compositions was sealed in the container prepared as described above, and the container was stored at a temperature of 60°C, and a relative humidity of 90% for 7 days. The stored container was accommodated in an ink cartridge which is the package, and the cartridge was mounted on a printer (PX-G5000, manufactured by Seiko Epson Corporation). Then, the ink composition in the storage body was discharged from a head including 360 nozzles and attached to a recording medium. After that, the ink composition on the recording medium was irradiated with an ultraviolet light beam at an accumulated energy of 200 mJ/cm$^2$, and a coated film having a thickness of 7 μm was obtained.

A coated film of the ink composition irradiated with the ultraviolet light beam was rubbed with a cotton swab and scratches or stains were checked for on the cotton swab. Based on the scratches or stains on the cotton swab, curing properties were evaluated according to the following evaluation criteria.

A: No scratches or stains on the cotton swab were observed when the accumulated energy was 150 mJ/cm$^2$.
B: No scratches or stains on the cotton swab were observed when the accumulated energy was 200 mJ/cm$^2$, but scratches or stains on the cotton swab were observed when the accumulated energy was 150 mJ/cm$^2$.
C: Scratches or stains on the cotton swab were observed even when the accumulated energy was 200 mJ/cm$^2$.

Visibility

The average transmittance of the containers prepared as described above in a visible light area of 400 nm to 800 nm was measured with a spectrophotometer (product name: U-3300 spectrophotometer, manufactured by Hitachi, Ltd.) The visibility was evaluated based on the obtained transmittance.

A: The transmittance was equal to or greater than 40%.
B: The transmittance was less than 40%.

Examples 1 to 5 and Comparative Examples 1 to 7

Any one of the ink compositions 1 to 6 was accommodated and sealed in any one of the containers (packs) 1 to 4, and the storage body including the ink composition sealed in the container was obtained. The combinations of the ink compositions and the containers are as shown in Table 4.

Table 4

| | | Examples | | | | | Comparative examples | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Ink composition | | Composition 1 | Composition 4 | Composition 2 | Composition 1 | Composition 7 | Composition 1 | Composition 3 | Composition 5 | Composition 6 | Composition 5 | Composition 3 | Composition 7 |
| Pack | Container 1 (water vapor transmission rate: 5 g/m²·24h) | O | O | O | | O | | O | O | O | | | |
| | Container 2 (water vapor transmission rate: 25 g/m²·24h) | | | | | | O | | | | | O | O |
| | Container 3 (water vapor transmission rate: 0.1 g/m²·24h) | | | | | | | | | | O | | |
| | Container 4 (water vapor transmission rate: 5 g/m²·24h) | | | | O | | | | | | | | |

| | | Examples | | | | | Comparative examples | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Evalua-tion | Evaluation of foreign materials | A | A | B | A | A | C | A | C | C | A | B | C |
| | Evaluation of curing properties | B | B | A | B | A | B | C | B | C | B | C | B |
| | Evaluation of visibility | A | A | A | A | A | A | A | A | A | B | A | A |

In Comparative Example 1, since the container does not include the metal oxide layer, the generation of the foreign materials due to the moisture absorption was observed. In Comparative Example 2, since the ink composition having a low moisture absorption rate was used, the curing properties thereof were deteriorated. In Comparative Examples 3 and 4, since the ink composition having a high moisture absorption rate was used, a large number of foreign materials was generated and the curing properties thereof were deteriorated. In Comparative Example 5, since the container includes the metal layer instead of the metal oxide layer, the visibility thereof was degraded. In Comparative Example 6 in which the ink composition having a low moisture absorption rate was used, since the container does not include the metal oxide layer, the generation of the foreign materials was slight compared to the case of Comparative Example 1, but the curing properties were deteriorated. Therefore, it was found that the invention is necessary in order to prevent the generation of the foreign materials, in a case of using the non-aqueous photocurable ink jet composition having excellent curing properties in which the moisture absorption rate at a temperature of 60°C and relative humidity of 90% is from 0.3% by mass/24 hours to 2.0% by mass/24 hours. In Example 5 using the composition 7, the curing properties were further improved compared to the case of Example 1, but in Comparative Example 7 using the composition 7 in the same manner, the generation of the foreign materials was observed in the same manner as in the case of Comparative Example 1, and the foreign materials caused by the initiator were also observed as the residual materials. Therefore, it was found that the invention is particularly advantageous in decreasing the foreign materials in the case of using the composition which contains the acylphosphine oxide-based compound and has further improved curing properties.

The entire disclosure of Japanese Patent Application No.: 2014-070038, filed March 28, 2014 and 2014-070059, filed March 28, 2014 are expressly incorporated by reference herein.

**Claims**

1. A non-aqueous photocurable ink jet composition storage body comprising:

   a non-aqueous photocurable ink jet composition which contains a polymerizable compound of which a moisture absorption rate at a temperature of 60°C and relative humidity of 90% is equal to or greater than 1.5% by mass/24 hours; and
   a container (70) which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

2. The non-aqueous photocurable ink jet composition storage body according to claim 1,
   wherein the polymerizable compound includes one or more selected from a group consisting of oxygen atoms coupled with two acyclic hydrocarbon groups, a heterocyclic group containing oxygen atoms, and a hydroxyl group.

3. The non-aqueous photocurable ink jet composition storage body according to claim 1 or claim 2,
   wherein content of the polymerizable compound is equal to or greater than 20% by mass, with respect to the total amount of the non-aqueous photocurable ink jet composition.

4. The non-aqueous photocurable ink jet composition storage body according to any one of the preceding claims,
   wherein the metal oxide layer contains one or more oxides selected from a group consisting of silica, alumina, titania, zirconia, and ceria.

5. The non-aqueous photocurable ink jet composition storage body according to any one of the preceding claims,
   wherein the non-aqueous photocurable ink jet composition further contains an acylphosphine oxide-based compound.

6. The non-aqueous photocurable ink jet composition storage body according to any one of the preceding claims,
   wherein the polymerizable compound contains a radical polymerizable compound.

7. The non-aqueous photocurable ink jet composition storage body according to any one of the preceding claims,
   wherein the non-aqueous photocurable ink jet composition further contains a pigment and a pigment dispersant.

8. The non-aqueous photocurable ink jet composition storage body according to any one of the preceding claims,
   wherein the container or the package has visible light transmission.

9. The non-aqueous photocurable ink jet composition storage body according to any one of the preceding claims,

wherein the moisture permeability of the container or the package is equal to or less than 20 g/m$^2$·24 hours.

10. A recording method comprising:

delivering the non-aqueous photocurable ink jet composition to discharge nozzles from the non-aqueous photocurable ink jet composition storage body according to any one of the preceding claims, through ink flow paths; and discharging the non-aqueous photocurable ink jet composition to a recording medium from the discharge nozzles.

11. The recording method according to claim 10, further comprising:

irradiating the non-aqueous photocurable ink jet composition attached to the recording medium with an ultraviolet light beam having an emission peak wavelength of 350 nm to 420 nm using a light emitting diode and curing the non-aqueous photocurable ink jet composition.

12. A non-aqueous photocurable ink jet composition storage body comprising:

a non-aqueous photocurable ink jet composition which contains a polymerizable compound, a pigment, and a pigment dispersant, in which the moisture absorption rate at a temperature of 60°C and relative humidity of 90% is from 0.3% by mass/24 hours to 2.0% by mass/24 hours; and
a container (70) which accommodates the non-aqueous photocurable ink jet composition and is formed of a member having a metal oxide layer, or a package which accommodates at least a container accommodating the non-aqueous photocurable ink jet composition and is formed of a member having a metal oxide layer.

13. The non-aqueous photocurable ink jet composition storage body according to claim 12,
wherein the polymerizable compound contains a radical polymerizable compound.

14. The non-aqueous photocurable ink jet composition storage body according to claim 12 or claim 13,
wherein the metal oxide layer contains one or more oxides selected from a group consisting of silica, alumina, titania, zirconia, and ceria.

15. The non-aqueous photocurable ink jet composition storage body according to any one of claims 12 to 14,
wherein the polymerizable compound includes one or more selected from a group consisting of oxygen atoms coupled with two acyclic hydrocarbon groups, a heterocyclic group containing oxygen atoms, and a hydroxyl group.

16. The non-aqueous photocurable ink jet composition storage body according to any one of claims 12 to 15,
wherein content of the polymerizable compound is equal to or greater than 20% by mass, with respect to the total amount of the non-aqueous photocurable ink jet composition.

17. The non-aqueous photocurable ink jet composition storage body according to any one of claims 12 to 16,
wherein the non-aqueous photocurable ink jet composition further contains an acylphosphine oxide-based compound.

18. The non-aqueous photocurable ink jet composition storage body according to any one of claims 12 to 17,
wherein the container or the package has visible light transmission.

19. The non-aqueous photocurable ink jet composition storage body according to any one of claims 12 to 18,
wherein moisture permeability of the container or the package is equal to or smaller than 20 g/m$^2$·24 hours.

20. A recording method comprising:

delivering the non-aqueous photocurable ink jet composition to discharge nozzles from the non-aqueous photocurable ink jet composition storage body according to any one of claims 12 to 19, through ink flow paths; and discharging the non-aqueous photocurable ink jet composition to a recording medium from the discharge nozzles.

# FIGURE

Europäisches
Patentamt

European
Patent Office

Office européen
des brevets

# EUROPEAN SEARCH REPORT

Application Number

EP 15 16 1349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 540 783 A1 (FUJIFILM CORP [JP]) 2 January 2013 (2013-01-02) * paragraphs [0089], [0102], [0170], [0200], [0218] - [0220], [0227], [0266], [0279]; claims 1-12; tables 1-3 * ----- | 1-20 | INV. B41J2/175 C09D11/00 C09D11/101 C09D11/30 |

TECHNICAL FIELDS
SEARCHED        (IPC)

B41J
C09D

The present search report has been drawn up for all claims

| Place of search | Date of completion of the search | Examiner |
|---|---|---|
| Munich | 7 July 2015 | Feldmann, Gabriele |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

                                           

& : member of the same patent family, corresponding
      document

EPO FORM 1503 03.82 (P04C01)

**ANNEX TO THE EUROPEAN SEARCH REPORT
ON EUROPEAN PATENT APPLICATION NO.**                EP 15 16 1349

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2015

| Patent document cited in search report | | Publication date | Patent family member(s) | | Publication date |
|---|---|---|---|---|---|
| EP 2540783 | A1 | 02-01-2013 | CN | 102850844 A | 02-01-2013 |
| | | | EP | 2540783 A1 | 02-01-2013 |
| | | | JP | 5486556 B2 | 07-05-2014 |
| | | | JP | 2013010832 A | 17-01-2013 |
| | | | US | 2013002773 A1 | 03-01-2013 |

For more details about this annex : see Official Journal of the European Patent Office, No. 12/82

**REFERENCES CITED IN THE DESCRIPTION**

**Patent documents cited in the description**

- JP 2007131330 A
- JP 2014070038 A
- JP 2014070059 A